# EUROPEAN PATENT SPECIFICATION

(11) **EP 4 050 516 B1**
(45) Date of publication and mention of the grant of the patent: **22.07.2026**
(21) Application number: 22160539.7
(22) Date of filing: 13.02.2014
(51) Int. Cl.: G06K 19/077, H01Q 1/22, H01Q 7/00

(54) **CARD BODY FOR A SMART CARD AND SMART CARD**
KARTENKÖRPER FÜR EINE CHIPKARTE UND CHIPKARTE
CORPS DE CARTE POUR UNE CARTE INTELLIGENTE ET CARTE INTELLIGENTE

(30) Priority: 29.06.2013 US 201361841286 P; 31.07.2013 US 201361860354 P; 21.08.2013 US 201361868089 P; 08.09.2013 US 201314020884; 13.11.2013 US 201314078527; 15.11.2013 US 201361905134 P; 12.12.2013 US 201361914996 P
(43) Date of publication of application: 31.08.2022
(62) Divisional of application: 14706512.2
(73) Proprietor: Féinics AmaTech Teoranta, Dublin 16, D16 X8C3 (IE)
(72) Inventor: Finn, David, Tourmakeady (IE); Ummenhofer, Klaus, 87600 Kaufbeuren (DE); Lotya, Mustafa, Celbridge (IE)
(74) Representative: Cremer & Cremer

(56) References cited:
- WO-A1-2014/206579
- KR-B1- 100 537 452
- US-A1- 2013 075 477

## Description

### TECHNICAL FIELD

This disclosure relates to card bodies for smart cards as defined in the preamble of claim 1 and to a smart card comprising said card body (CB) and a radio frequency identification chip.

### BACKGROUND

A dual interface (DI or DIF) smart card may generally comprise:
an antenna module AM ,
a card body CB, and
a booster antenna BA.

The antenna module "AM" may generally comprise a "DI" RFID chip (bare, unpackaged silicon die) or chip module (a die with leadframe, carrier or the like) - either of which may be referred to as "CM" - mounted to a module tape "MT". A module antenna MA may be disposed on the module tape MT for implementing a contactless interface. Contact pads "CP" may be disposed on the module tape MT for implementing the contact interface. The module tape MT may comprise a pattern of interconnects (conductive traces and pads) to which the chip CM and contact pads CP may be connected.

The module antenna MA may be connected, indirectly, via some of the interconnects to the chip CM, or may be directly connected to bond pads BP on the chip CM. The module antenna MA may comprise several turns of wire, such as 112 micron diameter insulated wire. Reference may be made to US 6,378,774 (2002, Toppan), for example FIGs. 12A, B thereof.

The card body CB - which may be referred to as a substrate, or an inlay substrate - may generally comprise one or more layers of material such as Polyvinyl Chloride (PVC), Polycarbonate (PC), PET-G (Polyethylene Terephtalate Glycol-modified), Copolyester (Tritan), Teslin^{™}, synthetic paper, paper and the like.

The card body CB may be generally rectangular, measuring approximately 54 mm x 86 mm (refer to ISO/IEC 7810), having a thickness of approximately 300µm thick. The card body CB is typically significantly (such as 20 times) larger than the antenna module AM.

The booster antenna BA may generally comprise a relatively large winding which may be referred to as a card antenna CA component (or portion) having a number of turns disposed in a peripheral area of the card body CB, and a relatively small coupler coil (or coupler antenna) CC component (or portion) having a number of turns disposed at a coupling area of the card body CB corresponding to the antenna module AM.

The card antenna CA and coupler coil CC may comprise wire mounted to (embedded in) the card body CB using an ultrasonic tool comprising a sonotrode and a capillary. See, for example US 6,698,089 and US 6,233,818. The wire may be non-insulated, insulated, or self-bonding wire, having an exemplary diameter in the range of approximately 50 - 112 µm.

### Some Patent References

NL 9100347 (1992, Nedap) discloses a contactless card having the following elements arranged as shown in Figuur 1; (1) geintegreerde schakeling (integrated circuit); (2) electronische schakeling (electronic circuit); (3) transformator (transformer); (4) kernmateriaal (core material); (5) condensator (condenser); (6) primaire spoel (primary coil) and (7) antennespoel (antenna coil).

As is evident from Figuur 1 of the Nedap patent, the electronic circuit (2, comparable to the chip CM herein) is connected with a first coil (3, comparable to the module antenna MA herein). A second coil (6, comparable to the coupling coil CC herein) is connected with the main antenna (1, comparable to the card antenna CA herein). The first coil (3, MA) is coupled with the second coil (6, CC), as aided by the core material (4). Another document KR 100 537 452 B1 describes a smart card featuring a secondary, contactless antenna coil and a zigzag-shaped amplification unit to increase mutual inductance and signal strength.

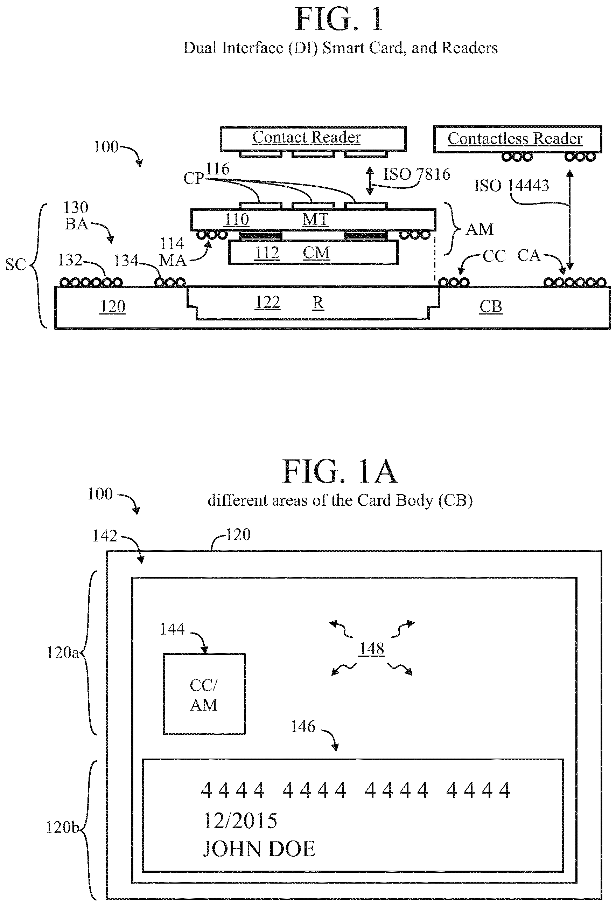

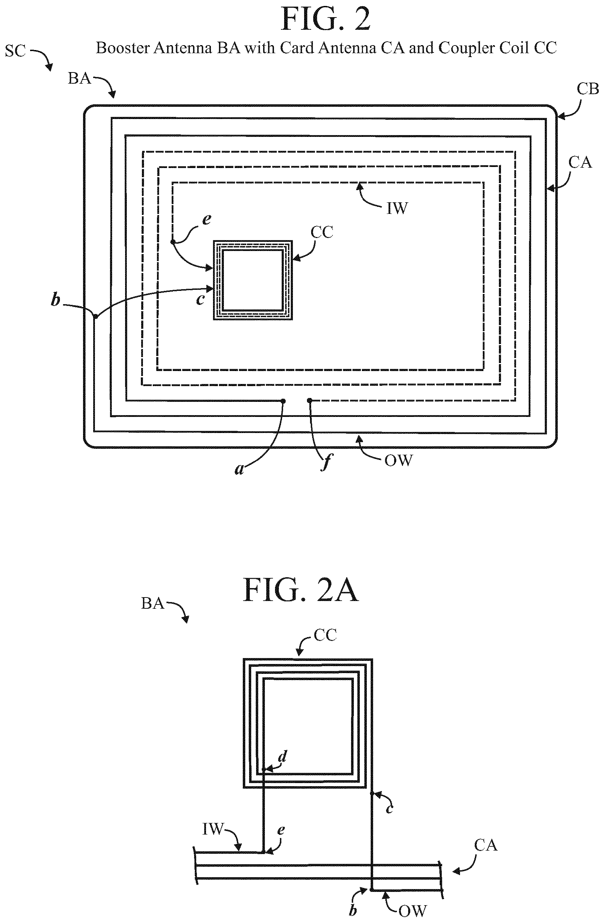

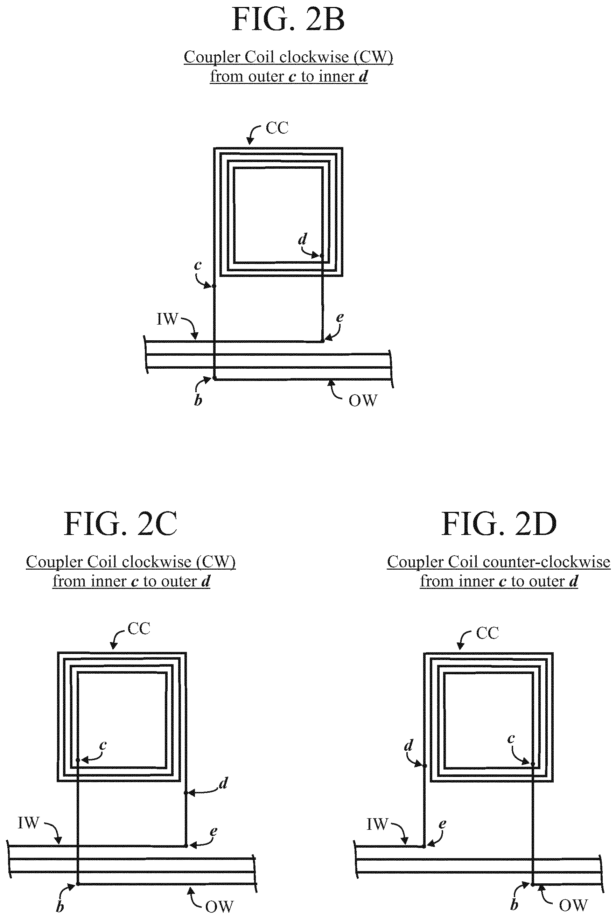

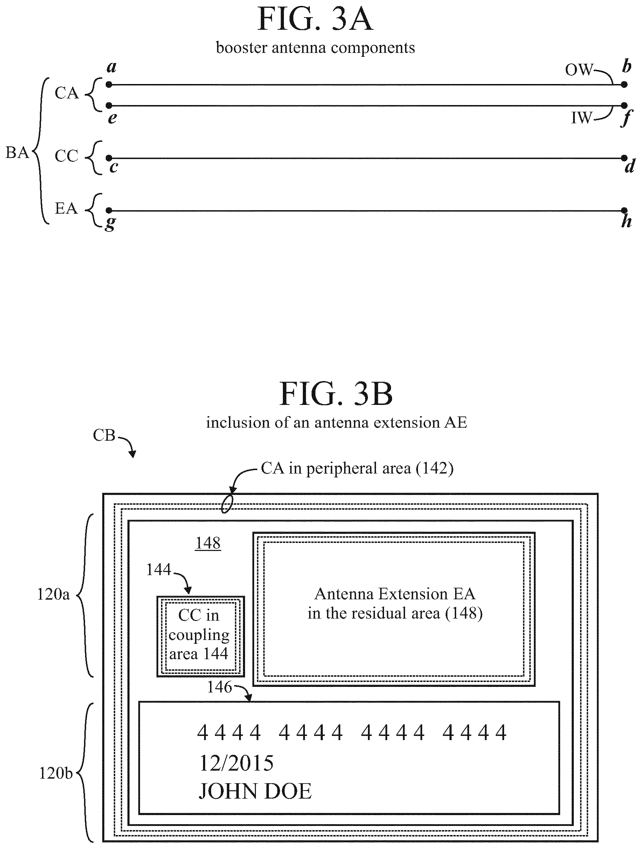

US 5,955,723 (Siemens; 1999) discloses a contactless chip card. A data carrier configuration includes a semiconductor chip. A first conductor loop is connected to the semiconductor chip and has at least one winding and a cross-sectional area with approximately the dimensions of the semiconductor chip. At least one second conductor loop has at least one winding, a cross-sectional area with approximately the dimensions of the data carrier configuration and a region forming a third loop with approximately the dimensions of the first conductor loop. The third loop inductively couples the first conductor loop and the at least one second conductor loop to one another. The first and third conductor loops are disposed substantially concentrically. FIGS. 1 and 2 illustrate that a large coil, that is to say a second conductor loop 3, has approximately the dimensions of a chip card. FIG. 1 illustrates a way of forming the small loop 4 of the large coil 3 without any crossovers, whereas FIG. 2 illustrates a small loop 4 having a crossover. FIG. 3 shows a further possible configuration of a coupling region between a small conductor loop 2 connected to a semiconductor chip 1, and a large conductor loop 3. In this case, the coupling region has a meandering path, in order to obtain as long a length of the coupling region as possible.

US 8130166 (Assa Abloy; 2012) discloses coupling device for transponder and smart card with such device. A coupling device is formed by a continuous conductive path having a central section and two extremity sections, the central section forming at least a small spiral for inductive coupling with the transponder device, the extremities sections forming each one large spiral for inductive coupling with the reader device, wherein the small spiral shows a larger pitch than the ones of the large spirals, and wherein the two extremities of the continuous path are loose such that the coupling device forms an open circuit. The pitches of the large spirals are chosen such as that the interturn stray capacitances is important and that the large spirals have mainly a capacitive behavior. And the pitch of the small spiral is chosen such as that the interturn stray capacitances are negligible, and that the small spiral has mainly an inductive behavior. FIG. 3 shows an illustrative embodiment of the transponder device and coupling device. The coupling device 10 is formed by a single conductive path having a central section and two external sections. The central portion is formed as a small spiral 12 with a large pitch, whereas the two external sections form a large spiral 11 and 11' with a small pitch. In fact, the spiral 11 and 11' are two distinct spiral physical elements, but forming a single geometrical spiral element (with a short interruption in the middle).

US 20130146671 (Infineon; 2013) discloses a booster antenna structure for a chip card is provided, wherein the booster antenna structure may include a booster antenna; and an additional electrically conductive structure connected to the booster antenna. The contactless interface on the chip card can have a chip card antenna which is contained in the chip card and connected to the chip. In order to improve the wireless communication capability, a further antenna can be provided in addition to the chip card module antenna, namely an amplifier antenna or booster antenna.

US 8,474,726 (Finn; 2013) discloses a transponder with an antenna module having a chip module and an antenna; a booster antenna having a first antenna structure in the form of a flat coil having a number of turns, an outer end and an inner end, and a second antenna structure in the form of a flat coil having a number of turns, an outer end and an inner end; the inner end of the second antenna structure connected with the outer end of the first antenna structure. The antenna module may be positioned so that its antenna overlaps one of the first antenna structure or the second antenna structure. An antenna module having two additional antenna structures is disclosed. Methods of enhancing coupling are disclosed.

US 20130075477 (Finn, Ummenhofer; 2013) discloses improving coupling in and to RFID smart cards. A data carrier such as a smart card comprising an antenna module (AM) and a booster antenna (BA) are described. The booster antenna (BA) has an outer winding (OW) and an inner winding (IW), each of which has an inner end (IE) and an outer end (OE). A coupler coil (CC) is provided, connecting the outer end (OE, b) of the outer winding (OW) and the inner end (IE, e) of the inner winding (IW). The inner end (IE, a) of the outer winding (OW) and the outer end (OE, f) of the inner winding (IW) are left un-connected (free floating). The coupler coil (CC) may have a clockwise (CW) or counter-clockwise (CCW) sense which is the same as or opposite to the sense (CW or CCW) of the outer and inner windings. Various configurations of booster antennas (BA) are disclosed.

### SUMMARY

It is a general object of the invention to provide improved techniques for improving coupling with RFID smart cards. It is a further general object of the invention to provide an improved booster antenna (BA) for smart cards.

The invention is set out in the appended set of claims.

The booster antenna BA comprises a card antenna CA component, a coupler coil (or coupler antenna) CC component, and an extension antenna (or extension coil) EA component.

The booster antenna BA may further comprise at least one capacitive extension (CE) connected with one or more of the booster antenna components (CA, CC, EA).

According to the invention a card body (CB) comprises:
a surface having a surface area, an upper portion of the surface constituting approximately half of the surface area of the card body and a lower portion of the surface constituting a remaining approximately half of the surface area of the card body;
a first area extending around a peripheral portion of the card body in at least the upper portion of the card body;
a card antenna (CA) disposed at least partially in the first area and having at least one free end;
a second area located in the upper portion of the card body and corresponding in size to an antenna module (AM) for the smart card;
a third area located in the upper portion of the card body which is separate from the first area and the second area; and
an extension antenna (EA) disposed in the third area.

A coupler coil (CC) is disposed in the second area.

The extension antenna (EA):
- the extension antenna (EA) may contribute to the inductance of the booster antenna (BA);
- the extension antenna (EA) is in the form of a coil and may comprise at least one cross-over;
- the extension antenna (EA) is connected at one end to the coupler coil (CC) or the card antenna (CA);
- the extension antenna (EA) may have a free end.

The card antenna (CA) may comprise:
an outer winding (OW) having an outer end (b) and an inner end (a);
an inner winding (IW) having an outer end (f) and an inner end (e);
the inner end (e) of the inner winding (IW) is connected with the outer end (b) of the outer winding (OW); and
the inner end (a) of the outer winding (OW) and the outer end (f) of the inner winding (IW) are unconnected.

According to the invention, a smart card comprises a card body (CB) as defined in claim 1 having a booster antenna (BA) with an extension antenna (EA), and a radio frequency identification (RFID) chip, and has a coupler coil (CC).

According to some embodiments of the invention generally, a booster antenna (BA) comprises the following components: a card antenna (CA) component; a coupler coil (CC) component; and an extension antenna (EA) component; and it may be characterized in that: at least one of the components has a sense which is opposite to one or more of the other components. At least one of the components may comprise an outer winding (OW, ow) and an inner winding (IW, iw). At least one of the components may be laid from an innermost turn to an outermost turn. At least one of the other of the components may be laid from an outermost turn to an innermost turn.

According to some embodiments of the invention generally, a booster antenna (BA) comprises a card antenna (CA) component; a coupler coil (CC) component; and may comprise at least one capacitive stub (1512, 1514) connected with at least one of the coupler coil (CC) component and the card antenna (CA) component. One of the capacitive stubs (1512) may be connected with the card antenna (CA) component. Another of the capacitive stubs (1514) may be connected with the coupler coil (CC) component. There may be two capacitive stubs, and each may be formed in a flat coil pattern having a number of turns. The two capacitive stubs may be substantially similar to one another, and close to one another.

According to some embodiments (examples) of the invention, generally, booster antenna (BA) components such as card antenna (CA), coupler coil (CC) and extension antenna (EA) may be laid with senses (clockwise, counter clockwise) which are opposite from one another. When being laid, these components may be laid from an innermost turn to an outermost turn, or vice-versa.

The invention(s) described herein may relate to industrial and commercial industries, such RFID applications, smart cards, electronic passports and the like.

Other objects, features and advantages of the invention(s) disclosed herein may become apparent in light of the following illustrations and descriptions thereof.

### BRIEF DESCRIPTION OF THE DRAWINGS

Reference will be made in detail to embodiments of the disclosure, non-limiting examples of which may be illustrated in the accompanying drawing figures (FIGs). The figures may generally be in the form of diagrams. Some elements in the figures may be exaggerated, others may be omitted, for illustrative clarity. Some figures may be in the form of diagrams.

Although the invention is generally described in the context of various exemplary embodiments, it should be understood that it is not intended to limit the invention to these particular embodiments, and individual features of various embodiments may be combined with one another. Any text (legends, notes, reference numerals and the like) appearing on the drawings are incorporated by reference herein. Some elements may be referred to with letters ("BA", "CA", "CC", "EA", and the like), rather than or in addition to numerals.
**FIG. 1** is a cross-section of a dual-interface smart card and readers.
**FIG. 1A** is a top view of a card body (CB) for the smart card of FIG. 1.
**FIG. 2** is a diagram of a booster antenna (BA) having a card antenna (CA) with an inner winding (IW) and an outer winding (OW), and a coupler coil (CC), not being part of the invention, being present for illustration purposes only.
**FIGs. 2A - 2D** are diagrams illustrating arrangements of a coupler coil (CC) component in relation to a card antenna (CA) component.
**FIG. 3A** is a diagram illustrating a card antenna (CA), coupler coil (CC) and extension antenna (EA) components of a booster antenna (BA).
**FIG. 3B** is a diagram illustrating various areas of a card body CB of a smart card.
**FIG. 4** is a diagram illustrating some antenna components, at least one of which is a "true" coil having a cross-over.
**FIGs. 4A - 4E** are diagrams illustrating embodiments of a booster antenna (BA) with card antenna CA, a coupler antenna (CC) and an extension antenna (EA).
**FIGs. 4G** - **4I** are diagrams illustrating embodiments of a booster antenna (BA) with card antenna CA, a coupler antenna (CC) and an extension antenna (EA).
**FIG. 10A, 10B** are diagrams (plan views), each showing a configuration of a coupler coil (CC).
**FIGs. 11A - 11F** are diagrams (plan views), each showing a configuration of booster antenna (BA), and various arrangements of its components (CA, CC, EA).
**FIG. 12** shows diagrammatically, and **FIG. 12A** shows more "realistically", an exemplary embodiment of a booster antenna BA.
**FIGs. 13A - 13E** illustrate an example of laying the booster antenna (BA), step-by-step.
**FIG. 13F** is a diagram showing an embodiment of a booster antenna.
**FIG. 15** shows diagrammatically, and **FIG. 15A** shows more "realistically", an exemplary embodiment of a booster antenna (BA) having capacitive extensions (CE).
**FIG. 15B** is a diagram showing a configuration of a booster antenna (BA).
**FIG. 15C** is a diagram showing a configuration for components of a booster antenna (BA).
**FIG. 15D** is a diagram showing a configuration for components of a booster antenna (BA).

### DETAILED DESCRIPTION

Various embodiments will be described to illustrate teachings of the invention(s), and should be construed as illustrative rather than limiting. Any dimensions and materials or processes set forth herein should be considered to be approximate and exemplary, unless otherwise indicated.

In the main hereinafter, RFID cards, electronic tags and secure documents in the form of pure contactless cards, dual interface cards, phone tags, electronic passports, national identity cards and electronic driver licenses are discussed. As will be evident, many features and embodiments may be applicable to (readily incorporated in) other forms of smart cards, such as EMV payment cards, metal composite cards, metal hybrid cards, metal foil cards, access control cards and secure credential documents. As used herein, any one of the terms "transponder", "tag", "smart card", "data carrier" and the like, may be interpreted to refer to any other of the devices similar thereto which operate under ISO 14443 or similar RFID standard. The following standards are mentioned:
- ISO/IEC 14443 (Identification cards - Contactless integrated circuit cards - Proximity cards) is an international standard that defines proximity cards used for identification, and the transmission protocols for communicating with it.
- ISO/IEC 7816 is an international standard related to electronic identification cards with contacts, especially smart cards.
- EMV standards define the interaction at the physical, electrical, data and application levels between IC cards and IC card processing devices for financial transactions.

There are standards based on ISO/IEC 7816 for contact cards, and standards based on ISO/IEC 14443 for contactless cards.

A typical data carrier described herein comprises
(i) an antenna module (AM) having an RFID chip (CM; or chip module) and a module antenna (MA),
(ii) a card body (CB) and
(iii) a booster antenna (BA) with coupler coil (CC) disposed on the card body (CB) to enhance coupling between the module antenna (MA) and the antenna of an external RFID "reader".

When "chip module" is referred to herein, it should be taken to include "chip", and vice versa, unless explicitly otherwise stated.

The module antenna (MA) may comprise a coil of wire, conductive traces etched or printed on a module tape (MT) or antenna substrate (AS) for the antenna module (AM), or may be incorporated directly on the chip itself.

Throughout the various embodiments disclosed herein, unless specifically noted otherwise (in other words, unless excluded), the element referred to as "CM" will most appropriately be a bare integrated circuit (IC) die (or RFID chip), rather than a chip module (a die with a carrier). In contrast therewith, some figures present examples that are specifically "chip modules" having IC chips (such as a "CM") mounted and connected to substrates. A "chip module" (die and carrier) with a module antenna (MA) mounted and connected thereto may be referred to as an antenna module (AM).

The booster antenna (BA) with coupler coil (CC) may be formed by embedding wire in a card body (CB). However, it should be understood that the antenna may be formed using processes other than by embedding wire in a substrate, such as additive or subtractive processes such as printed antenna structures, coil winding techniques (such as disclosed in US 6,295,720**),** antenna structures formed on a separate antenna substrate and transferred to the inlay substrate (or layer thereof), antenna structures etched (including laser etching) from a conductive layer on the substrate, structured nanowire networks (including laser ablation) on the substrate, conductive material deposited on the substrate or in channels formed in the substrate, or the like. When "inlay substrate" is referred to herein, it should be taken to include "card body", and vice versa, as well as any other substrate for a secure document, unless explicitly otherwise stated.

The descriptions that follow are mostly in the context of dual interface (DI, DIF) smart cards, and relate mostly to the contactless operation thereof. Many of the teachings set forth herein may be applicable to electronic passports and the like having only a contactless mode of operation. Generally, any dimensions set forth herein are approximate, and materials set forth herein are intended to be exemplary.

**FIGs. 1** and **1A** illustrate a smart card (SC) 100 in cross-section, along with a contact reader and a contactless reader. The antenna module AM may comprise a module tape (MT) 110, an RFID chip (CM) 112 disposed on one side of the module tape MT along with a module antenna (MA) 114 and contact pads (CP) 116 disposed on the other side of the module tape MT for interfacing with an external contact reader. The card body (CB) 120 comprises a substrate which may have a recess (R) 122 extending into one side thereof for receiving the antenna module AM. (The recess R may be stepped - such as wider at the surface of the card body CB - to accommodate the profile of the antenna module AM.) The booster antenna (BA) 130 comprises turns (or traces) of wire (or other conductor) embedded in (or disposed on) the card body CB, and comprises a number of components such as (i) a card antenna (CA) component 132 and (ii) a coupler coil (CC) component 134.

The card body (CB) 120 has a surface with an overall surface area, such as approximately 54mm x 86 mm ~= 4.600 mm². An upper portion 120a of the card body CB constitutes approximately half (such as 50-70%) of the overall surface area of the card body CB, and a lower portion 120b of the card body CB constitutes a remaining approximately half (such as 30-50%) of the overall surface area of the card body CB.

A "peripheral" area 142 of the surface of the card body CB extends around the periphery of the card body CB in at least the upper portion 120a thereof, and may have a width of up to approximately 5 mm. The card antenna CA component is disposed in this first area. The width of the first, peripheral area 142 may be greatest at the top edge of the card body CB, of medium width at the side edges of the card body CB, and least at the bottom edge of the card body CB.

A "coupling" area 144 of the surface of the card body CB is located in an interior area (within the peripheral area 142) of the card body CB, in the upper portion 120a thereof, at a position corresponding to the location of the antenna module AM, and is of approximately the same size as the antenna module AM, such as approximately 8.2mm x 10.8mm for a 6-contact module and 11.8mm x 13mm for an 8-contact module.

An "embossing" area 146 of the surface of the card body CB is located in an interior area (within the peripheral area 142) of the card body CB, in the lower portion 120b thereof, is separate from the peripheral area 142 and the coupling area 144, and may constitute most (such as 80-90%) of the lower portion 120b of the card body CB.

A "remaining" (or "residual") area 148 of the surface of the card body CB is located in an interior area (within the peripheral area 142) of the card body CB, in the upper portion 120a thereof, is separate from the peripheral area 142 and the coupling area 144, and may constitute most (such as 60-80%) of the upper portion 120b of the card body CB. The card antenna 132 and coupler coil 134 are not disposed in this remaining area 148 - in other words, are disposed substantially entirely in areas (142, 144) other than the remaining area 148 (and other than the embossing area 146).

As described in greater detail hereinbelow, according to the invention, generally, an additional booster antenna component, referred to herein as an antenna extension (EA) component, is disposed in the remaining (or residual) area 148 of the surface of the card body CB. The antenna extension EA may comprise several turns (or traces) of wire (or other conductive material), and is connected at one end with the card antenna CA or the coupler coil CC.

It is generally not desirable, but nevertheless possible that some of the booster antenna BA components, particularly at least a portion of the card antenna CA and a portion of the extension antenna EA may extend into the embossing area (146). In such a scenario, flat ribbon wire may be used. A wire for the booster antenna BA may be pre-flattened in an area which will correspond to where the wire will be disposed in the embossing area (146).

### An Example of a Booster Antenna (BA)

The aforementioned US 20130075477 discloses a booster antenna BA arrangement (configuration) for a smart card. The booster antenna BA generally comprises a card antenna CA and a coupler coil.

A card antenna CA may comprise a single wire (or conductive trace) having two ends, arranged in a generally a rectangular spiral pattern, and is disposed at least partially in the peripheral area (see 142, **FIG. 1A****)** of the card body CB. The card antenna CA may comprise different portions, such as disclosed in US 8130166 (Assa Abloy; 2012). The card antenna CA may comprise two distinct windings, such as an inner winding IW and an outer winding OW. A coupler coil CC may or may not be associated with the card antenna CA. The card antenna CA and coupler coil CC constitute two components of a booster antenna BA.

According to the invention, a component, referred to herein as an antenna extension EA, is associated with the booster antenna BA, and may be used with any suitable configuration of card antenna CA and coupler coil CC.

**FIG. 2** is for illustration purposes and shows a booster antenna BA comprising a card antenna CA component extending around the peripheral area (142) of a card body CB, and having two windings - an outer winding OW and an inner winding IW, both extending substantially around the peripheral area (142) of the card body CB. Additionally, a coupler coil CC is shown which is disposed in the coupling area (144).

The booster antenna BA may be formed using insulated, discrete copper wire disposed (such as ultrasonically bonded) around (inside of) the perimeter (periphery) of a card body CB (or inlay substrate, or data carrier substrate, such as formed of thermoplastic). The booster antenna BA may comprise an outer winding OW (or coil, D) and an inner winding IW (or coil, D), and further comprises a coupler coil CC, all of which, although "ends" of these various coil elements are described, may be formed from one continuous length of wire (such as 80µm self-bonding wire) which may be laid upon or embedded in the card body CB.

The outer winding OW may be a long wire (or conductive trace) wire having two ends - an inner end "a" and an outer end "b" - mounted to the card body CB in the form of a rectangular spiral having a number of (at least one) turns, and may be disposed in the peripheral area (142) of the card body CB.

The outer winding OW (compare D, FIG. 1A) may be formed as a spiral having a number (such as 2-3) of turns and having an inner end IE at point "a" and an outer end OE at point "b". The outer winding OW is near (substantially at) the periphery (perimeter) of the card body CB. The inner end IE ("a") of the outer winding OW is a free end.

The dimensions of the card body CB may be approximately 54mm x 86mm. The outer dimension of the outer winding OW of the booster antenna BA may be approximately 80 x 50mm. The wire for forming the booster antenna BA may have a diameter (d) of approximately 100 µm (including, but not limited to 80µm, 112µm, 125µm).

The inner winding IW may be a long wire (or conductive trace) having two ends - an inner end "e" and an outer end "f" - mounted to the card body in the form of a rectangular spiral having a number (at least one) of turns, and may be disposed in the peripheral area (142) of the card body CB. The inner winding IW may be disposed within (towards the interior of the card body CB) the outer winding OW.

The outer end "b" of the outer winding OW may be connected with the inner end "e" of the inner winding IW, either directly (not shown, see FIG. 2A of US 13600140) or via the intermediary of a coupler coil CC.

The inner end IE (a) of the outer winding OW and the outer end OE (f) of the inner winding IW may be left unconnected, as "free ends".

The overall booster antenna BA comprising outer winding OW, coupler coil CC and inner winding IE is an open circuit, and may be referred to as a "quasi-dipole" - the outer winding OW constituting one pole of the dipole, the inner winding IW constituting the other pole of the dipole - center fed by the coupler coil CC.

The coupler coil CC may be a long wire (or conductive trace) or conductive trace having two ends "c" and "d". US 20130075477 discloses various configurations for laying and connecting the inner winding IW, outer winding OW and coupler coil CC. See, for example, FIGs. 3A-3D therein. The present invention is not limited to any particular one(s) of these configurations.

The coupler coil CC may be formed as a spiral having a number (such as approximately 10) of turns and having two ends "c" and "d". The end "c" may be an outer end OE or an inner end IE, the end "d" may be an inner end IE or an outer end OE, as described with respect to the embodiments shown in FIGs. 3A, 3B, 3C, 3D of US 20130075477**.** The coupler coil CC is disposed at an interior portion of the card body CB, away from the periphery, and is shown only generally with a few dashed lines in **FIG. 2****.**

It should be understood that the booster antenna BA could be made with other than wire using additive processes such as printing conductive material onto the substrate CB, or subtractive processes such as etching conductive material away from the substrate CB. For such non-wire antennas, although there may be no actual direction such as is inherent with laying or embedding the wire (the course of laying the wire, from one end to the other), but the resulting spiral elements OW, IW, CC of the booster antenna BA may nevertheless exhibit a clockwise CW or counter-clockwise CCW "virtual sense" (or orientation) which can be determined by analogy to laying wire. (For an additive process such as inkjet printing, which is sequential, the sense would be actual.) The "sense" can be determined by following the pattern from "a" to "f", or from "f" to "a".

As used herein, "pitch" may refer to the average distance, center-to-center (c-c), between adjacent turns of a wire for a winding (OW, IW) or the coupler coil (CC), as it is being laid. (Or, by analogy, to the center-to-center distance between adjacent conductive tracks made by additive or subtractive processes). It should be understood that during manufacturing (including as a result of subsequent manufacturing steps such as laminating), the pitch of the wire may vary or change somewhat, such as +/- 5%, or more. And, when going around a corner, such as in a rectangular spiral, the pitch may be somewhat indeterminate. It should also be understood that the pitch of the windings (OW, IW) or coupler coil (CC) may be advertently altered (typically increased) locally, such as at the free ends "a" and "f", to accommodate manufacturing processes (such as starting and ending embedding the wire) and the like. "Pitch" may refer to the initial (during laying) or final (after laminating) distance (c-c) between adjacent turns of a winding.

The outer winding OW, coupler coil CC and inner winding IW may be formed as one continuous structure, using conventional wire embedding techniques. It should be understood that references to the coupler coil CC being connected to ends of the outer winding (OW) and inner winding (IW) should not be construed to imply that coupler coil CC is a separate entity having ends. Rather, in the context of forming one continuous structure of outer winding OW, coupler coil CC and inner winding IW, "ends" may be interpreted to mean positions corresponding to what otherwise would be actual ends - the term "connected to" being interpreted as "contiguous with" in this context.

The inner winding IW may be disposed within the outer winding OW, as illustrated, on a given surface of the card body CB (or layer of a multi-layer inlay substrate).

The turns of the outer winding OW and inner winding IW of the booster antenna BA may be at a pitch of 0.2mm (200µm), resulting in a space of approximately one wire diameter between adjacent turns of the outer winding OW or inner winding IW. The pitch of the turns of the coupler coil CC may be substantially the same as or less than (stated otherwise, not greater than) the pitch of turns of at least one of the outer winding OW and inner winding IW - for example 0.15mm (150 µm), resulting in space smaller than one wire diameter between adjacent turns of the coupler coil (CC). Self-bonding copper wire may be used for the booster antenna BA. The pitch of both the outer/inner windings OW/IW and the coupler coil CC may both be approximately 2x (twice) the diameter of the wire (or width of the conductive traces or tracks), resulting in a spacing between adjacent turns of the spiral(s) on the order of 1 wire diameter (or trace width). The pitches of the outer winding OW and the inner winding IW may be substantially the same as one another, or they may be different than each other. The outer winding OW and inner winding IW may have the same sense (clockwise CW or counter-clockwise CCW) as each other.

It is within the scope of the invention that more turns of wire for the coupler coil CC can be accommodated in a given area - for example, by laying two "courses" of wire, one atop the other (with an insulating film therebetween, if necessary), in a laser-ablated trench defining the area for the turns of the coupler coil CC.

In **FIG. 2****,** the coupler coil CC is shown without detail, represented by a few dashed lines. Some details of its construction, and how it may be connected with the outer winding OW and inner winding IW are set forth in **FIGs. 2A-2D****.**

**FIG. 2A** shows one example of a coupler coil CC component which is laid by starting at a point "c" (coming from an outer winding OW of the card antenna CA), laying the coupler coil CC component from an outermost turn to an innermost turn thereof, in a counter-clockwise CCW direction. When the innermost winding of the coupler coil CC component is complete (point "d'), the wire crosses-over the already laid turns of the coupler coil CC component to resume (or continue) formation of the card antenna CA component (such as the inner winding IW thereof), by way of example. Some alternatives include:
(i) winding in a clockwise CW direction,
(ii) laying the innermost turn and working outward to the outermost turn,
(iii) laying only a portion of the coupler coil CC component (such as an inner winding iw thereof), exiting and laying at least a portion of another booster antenna BA component, and later returning to lay a remaining portion of the coupler coil CC component.

**FIG. 2B** shows an example of a coupler coil CC component which is laid by starting at a point "*c*" (coming from an outer winding OW of the card antenna CA), laying the coupler coil CC component from an outermost turn to an innermost turn thereof, in a clockwise CW direction. When the innermost winding of the coupler coil CC component is complete (point ***"d***")*,* the wire crosses-over the already laid turns of the coupler coil CC component to resume (or continue) formation of the card antenna CA component (such as the inner winding IW thereof), by way of example.

**FIG. 2C** shows an example of a coupler coil CC component which is laid by starting at a point "c" (coming from an outer winding OW of the card antenna CA), laying the coupler coil CC component from an innermost turn to an outermost turn thereof, in a clockwise CW direction. (This requires several cross-overs, as illustrated.) When the outermost winding of the coupler coil CC component is complete (point "***d***"), the wire is routed (no cross-over may be required) towards the periphery of the card body CB to resume (or continue) formation of the card antenna CA component (such as the inner winding IW thereof), by way of example.

**FIG. 2D** shows an example of a coupler coil CC component which is laid by starting at a point **"*c*"** (coming from an outer winding OW of the card antenna CA), laying the coupler coil CC component from an innermost turn to an outermost turn thereof, in a counter-clockwise CCW direction. When the outermost winding of the coupler coil CC component is complete (point "***d***'), the wire is routed (no cross-over may be required) towards the periphery of the card body CB to resume (or continue) formation of the card antenna CA component (such as the inner winding IW thereof), by way of example.

An antenna module AM may be mounted in on the card body CB so that its module antenna MA is closely adjacent the coupler coil CC, for coupling therewith. The antenna module AM may be disposed with its module antenna MA overlapping the coupler coil CC, or with its module antenna completely within the interior of the coupler coil CC, or with entirely within the coupler coil CC. The antenna module AM may be installed in a milled cavity on the card body CB so that its module antenna MA may be substantially coplanar with the coupler coil CC. The module antenna MA may be at a different level than (not coplanar with) the coupler coil CC.

The module antenna MA for the antenna module AM may also be a coil of wire wound with either a clockwise (CW) or counter-clockwise (CCW) sense. The module antenna MA may have the same sense (CW, or CCW) as the coupler coil CC. The module antenna MA may have the opposite sense (CW, or CCW) as the coupler coil CC. The module antenna MA may have the same sense (CW, or CCW) as the outer winding OW and/or the inner winding IW. The module antenna MA may have the opposite sense (CW, or CCW) as the outer winding OW and inner winding IW.

It may be noted that NL 9100347 (NEDAP; 1992) and US 5,955,723 (Siemens; 1999) both describe two coils that are of a "given dimension". For example Coils 1 & 3 - Coil 1 on the chip and Coil 3 on the card - and they also say they are concentric to each other and that allows the coupling. In the arrangements described herein, the coils (MA, CC) are not restricted to being the same size, nor are they restricted to being concentrically positioned.

In the course of laying the wire (or otherwise creating conductive paths for the antenna elements OW, CC, IW, using any of a variety of additive or subtractive processes) for the booster antenna BA, it is evident that the wire (or conductive path) may need to cross over itself at several positions. For a booster antenna BA comprising wire, the wire may be insulated, typically self-bonding wire. For conductive paths, appropriate insulating or passivation layers or films may be used to facilitate cross-overs.

### Booster Antenna (BA) Components and Placement on the Card Body (CB)

**FIG. 3A** shows, schematically, some components of an inventive booster antenna (BA) - namely:
- an exemplary card antenna CA may comprise a first winding OW having two ends "a" and "b" and a second winding IW having two ends "e" and "f", such as may have been described above.
- an exemplary coupler coil CC may have two ends "c" and "d", such as may have been described above
- the card antenna CA and coupler coil CC may be connected with one another in any suitable manner, such as may have been described above
- an antenna extension EA may be a long wire (or conductive trace) wire having two ends "g" and "h" - mounted to the card body CB in any suitable form such as (but not limited to) a spiral having a number of (at least one) turns, and is disposed in the residual area (see 148, FIG. 1A) of the card body CB.
- the booster antenna BA components CA (OW, IW), CC and EA are illustrated as straight line segments, the dots at their two ends simply indicating an end position of the wire (or conductive trace), being included for graphic clarity.

**FIG. 3B** expands upon **FIG. 1A** and illustrates, schematically and generally, the addition (inclusion) of an extension antenna EA component of a booster antenna BA disposed in the residual area (148) of a smart card. The extension antenna EA is shown only generally in this figure, it is shown in greater detail in other figures.

### Some configurations of Booster Antennas BA with Extension Antennas EA

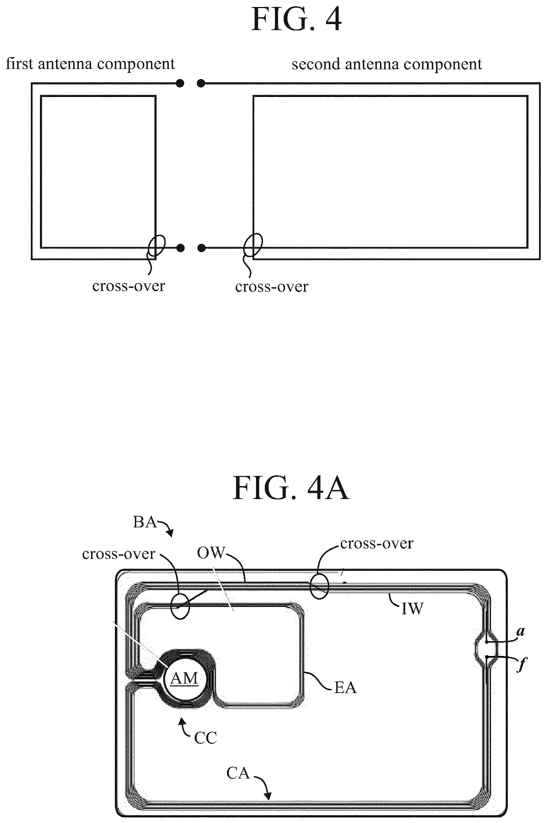

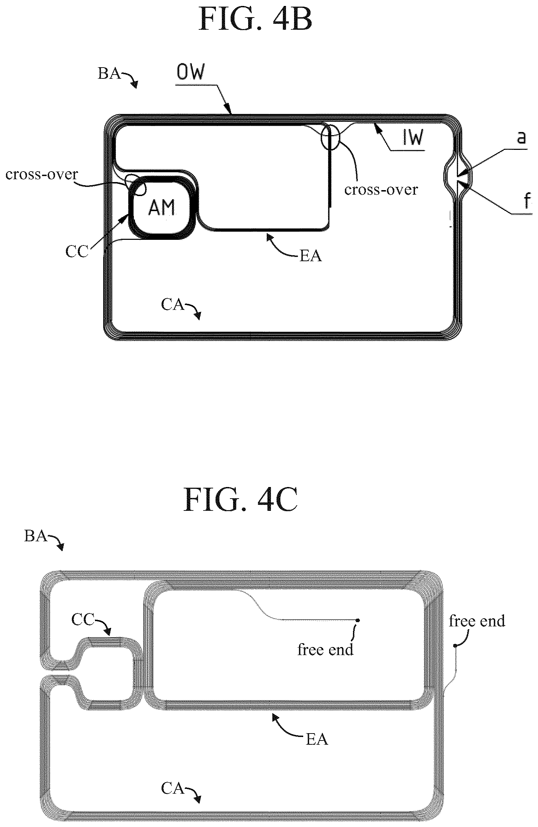

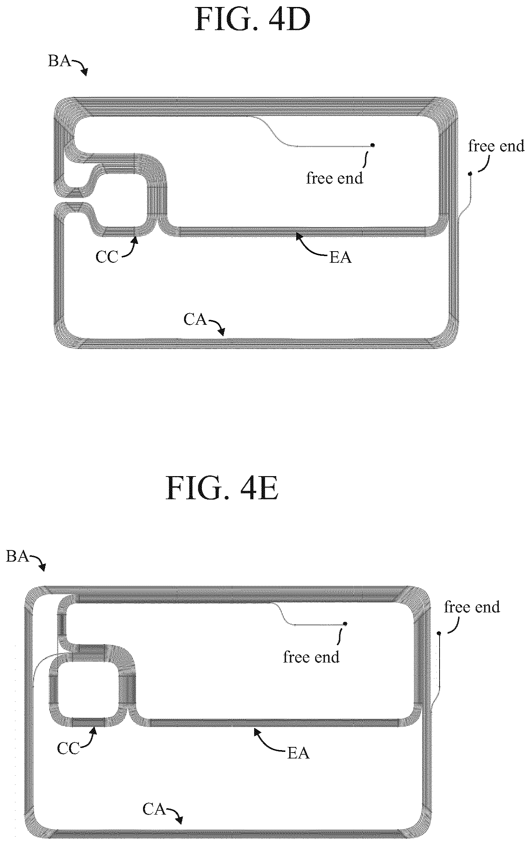

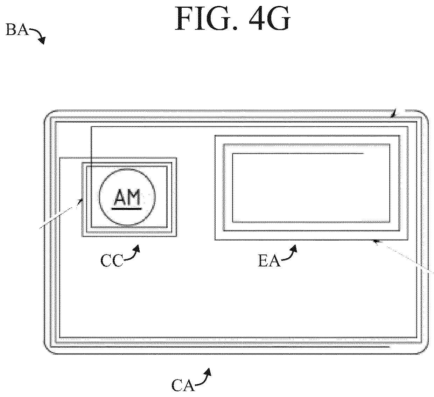

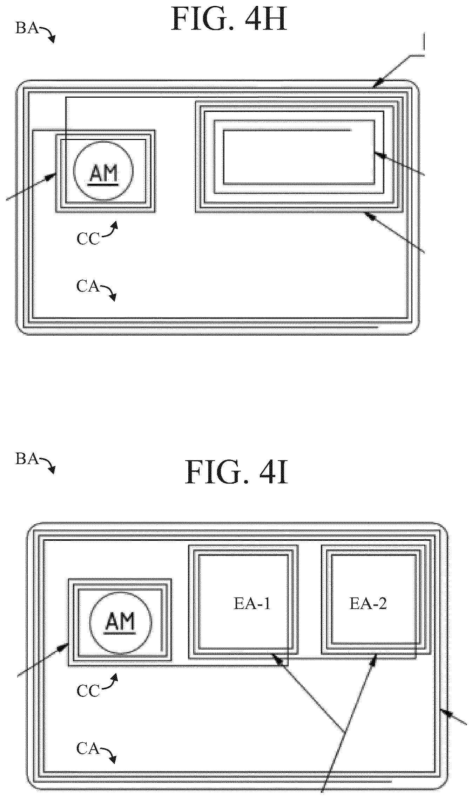

The booster antenna BA comprises a card antenna CA which may be one winding or two windings (such as inner winding IW and outer winding OW), a coupler coil CC (or coupler antenna) and an extension antenna EA (or antenna extension, or extension coil, or extension loop). Each of the (CA, OW, IW, CC, EA) booster antenna components typically has two ends (see FIG. 3A), and typically has a plurality of windings (or turns). Both of the ends of a given antenna component may be connected to ends of other antenna components; the extension antenna being connected at one end to the coupler coil or the card antenna. One of the two ends of an antenna component may be a free end; the card antenna having at least one free end. Some of these components may be in the form of an open loop coil or a closed coil; the extension antenna being a coil. An antenna component in the form of a "true" coil will exhibit a cross-over (see **FIG. 4****).**

**FIG. 4** is a diagram illustrating schematically some antenna components of a booster antenna (BA), at least one of which is a "true" coil having a cross-over. Generally, geometrically speaking, if a coil has at least one complete 360° turn, and is connected to another component that is disposed either outside of or inside of the coil - and there are no vias through the substrate (card body CB) for making connections from inside the coil to the outside thereof - it is inherently necessary that the pattern of the coil cross-over itself so that the two ends of the coil can connect with two terminals of the other component, as shown. In this figure, both of the components are true-coils. As used herein, a "true" coil may be defined as a coil, loop or spiral of wire (or other conductor) having two ends (such as "g" and "h"), extending at least approximately 360°, substantially enclosing an area (such as the coupling area 144), and crossing over itself (either from the outside in, or from the inside out).

US 61697825 filed 7 Sep 2012 discloses (FIG. 5H therein) a booster antenna BA comprising an inner winding IW and an outer winding OW (as disclosed herein, together the inner winding IW and outer winding OW may constitute a card antenna CA), an "open loop" coupler coil CC at the position of the antenna module AM, and an "extension" which may be referred to herein as an "antenna extension" or "extension antenna" or "extension coil" EA. See also US 13/600,140 filed 30 Aug 2012 (now US 20130075477 published 3/28/2013).

**FIG. 4A** is a diagram corresponding to FIG. 5H of US 13600140, showing a booster antenna (BA) having a card antenna CA, a coupler coil CC and an extension antenna (EA). These components may be formed (embedded in the card body CB) as one continuous embedded coil. The coupler coil CC is in the form of an open loop ("horseshoe").

Note that both of the outer winding OW and inner winding IW are enlarged to form the coupler coil CC and substantially fully encircle the antenna module AM in the coupling area (144). The free ends (a, f) of the card antenna CA are shown disposed at the right edge of the card body CB.

The extension antenna EA has one end extending from an end of the coupler coil CC, and another end extending from an end of the card antenna CA, and exhibits a cross-over. The extension antenna EA (or extension coil, or extension loop) is disposed so as to have a portion adjacent two sides (or approximately 180°) of the coupler coil CC.

An antenna extension EA component is shown as an "extension" of the inner winding IW, comprising some turns of wire in a spiral pattern disposed near the antenna module AM in the left hand side of the top (as viewed) portion (120a) of the card body CB. The extension antenna EA is disposed outside of, but near the coupling area (144) of the card body CB, in the residual area (148).

In this example, the coupler coil CC component of the booster antenna BA does not need to be a "true" coil, it does not need to have a cross-over. Rather, it may be a horseshoe-shaped "open" loop which substantially fully, but less than 360°, encircles the coupling area (144) for inductive coupling with the module antenna MA of the antenna module AM.

In this example, the card antenna CA is a true coil, in the form of a spiral extending around the peripheral area (142) of the card body CB, and exhibits a cross-over.

The extension antenna (or extension coil) EA has two ends - one end is connected to the coupler coil CC, the other end is connected to the card antenna CA. The extension antenna EA may be formed as a spiral of wire embedded in the card body CB, contiguous with one or more of the card antenna CA and coupler coil CC, and is a true coil which exhibits a cross-over, and contributes to the inductive coupling of the booster antenna BA. The extension antenna EA is disposed in the residual area (148) of the card body CB, and is shown as being disposed only in the upper half (120a) of the card body CB, but it may extend to the lower half (120b) of the card body CB, including any or all of adjacent to, above, below or into the embossing area (146).

**FIG. 4B** is a diagram showing a booster antenna BA having a card antenna CA, a coupler coil CC and an extension antenna EA. These components may be formed (embedded in the card body CB) as one continuous embedded coil. The coupler coil CC is in the form of a closed loop, having a cross-over.

The extension antenna EA (or extension coil, or extension loop) has one end extending from an end of the coupler coil CC, and another end extending from an end of the card antenna CA, and exhibits a cross-over. The extension antenna EA is disposed so as to have a portion adjacent two sides (or approximately 180°) of the coupler coil CC.

In this example, the layout of the inner winding (IW) and outer windings (OW) of the card antenna CA are slightly different than in **FIG. 4A****.** The inner winding IW of the card antenna CA passes over the extension antenna EA at a different location than in **FIG. 4A****.** In this example, the coupler coil CC forms a closed loop (rather than the horseshoe shown in **FIG. 4A****)** around the antenna module AM, has a cross-over, and may therefore be considered to be a "true" coil.

In this example, the extension coil EA is a true coil having a cross-over, is disposed in the residual area (148) of the card body CB, and is shown as being disposed only in the upper half (120a) of the card body CB, but it may extend to the lower half (120b) of the card body CB and into the embossing area (146). In this example, the extension antenna (EA) may occupy a larger area and have a narrower pitch (closer spacing of windings) than the extension antenna EA of **FIG. 4A****.**

A benefit of having the extension antenna EA in a booster antenna BA may be to increase the inductivity of the booster antenna BA while reducing its resonance frequency. For example, without the extension antenna EA, the card antenna CA may require significantly more windings (such as in excess of 15 windings, instead of only 7 or 8 windings), depending on the spacing between the windings and the diameter or cross sectional area of the conductor of the wire used to form the booster antenna BA. It is within the scope of the invention that the card antenna CA has only one winding.

Additionally, the extension antenna EA may increase the inductive coupling between the module antenna MA of the antenna module AM and the coupler coil CC of the booster antenna BA, and this may be more important than increasing the inductivity. A high level of coupling between the primary side (coupler coil) and secondary side (antenna module) improves the transfer of energy and communication (signaling). Better coupling may also reduce the quality factor (Q) and increase performance.

The booster antennas (BA) of **FIGs. 4A** **and** **4B** both show card antennas CA having an inner winding (IW) and an outer winding (OW). Compare **FIG. 2****.**

**FIG. 4C** is a diagram showing a booster antenna BA having a card antenna CA, a coupler coil CC and an extension antenna EA. These components may be formed (embedded in the card body CB) as one continuous embedded coil. The coupler coil CC is in the form of an open loop ("horseshoe").

The extension antenna EA (or extension coil, or extension loop) has one end extending from an end of the card antenna CA, its other end is a free end. The extension antenna EA is disposed so as to have a portion adjacent one side (or approximately 90°) of the coupler coil CC.

The card antenna CA may be a single coil (not having an inner winding IW and an outer winding OW as in some of the previous examples), having one free end.

The coupler coil CC is an open loop, rather than a "true coil", and is horseshoe-shaped, encircling most, but not all of the coupling area (144).

The extension antenna EA is a continuation of an end of the card antenna CA, and has one free end which is left unconnected. The extension antenna EA is disposed to interact on one side of the coupler coil CC. The extension antenna EA may have several turns of wire, but does not need a cross-over.

**FIG. 4D** is a diagram showing a booster antenna BA having a card antenna CA, a coupler coil CC and an extension antenna EA. These components may be formed (embedded in the card body CB) as one continuous embedded coil. The coupler coil CC is in the form of an open loop ("horseshoe").

The extension antenna EA (or extension coil, or extension loop) has one end extending from an end of the card antenna CA, its other end is a free end. The extension antenna EA is disposed so as to have a portion adjacent two sides (or approximately 180°) of the coupler coil CC.

In this example, the card antenna CA is one coil (does not have inner winding IW and outer winding OW as in some of the previous examples.). In this example, the coupler coil CC is not a "true coil", it is horseshoe-shaped and encircles most, but not all of the coupling area (144).

In some of the booster antenna BA designs described herein, the card antenna CA component of the booster antenna BA may have a total of 12 windings (or turns) - for example, 6 windings each for the inner winding IW and outer winding OW, or a total of 12 for a simple card antenna CA. The extension antenna EA may have two functions, firstly to lower the resonance frequency of the booster antenna BA to the desired resonance of 13.56 MHz from approximately 18.00 MHz, for example with only 10 windings (wire diameter 80 to 112 µm and a pitch of 100 µm) the antenna extension EA may reduce the resonance frequency by 5 MHz, and secondly to regulate or concentrate the electromagnetic field when in close coupling proximity to the external contactless reader (see **FIG. 1****)** at around 20 mm. The extension antenna EA may increase the coupling factor between the coupler coil CC and the antenna module AM.

The ability to reduce the number of windings required in the card antenna CA may enhance the performance and manufacturability of the smart card. More windings make the card stiffer, and there is not a lot of room in the peripheral area (142) of the card body CB, particularly below the embossing area (146) to accommodate very many turns of wire.

A "coupling area" (144) may be defined as the area immediately under the antenna module AM (and its module antenna (MA)). The coupler coil CC is located in the coupling area. The extension antennas EA is disposed in other than the coupling area, as discussed above, but nevertheless may enhance the overall coupling between the booster antenna BA and the module antenna MA, and / or the booster antenna BA and the antenna of an external reader.

In **FIGs. 4C** **and** **4D****,** the one end of the extension antenna EA may be connected with the coupler coil CC, rather than with the card antenna CA.

**FIGs. 4C** and **4D** illustrate how the shape and position of the extension antenna EA may be varied, with respect to the card antenna CA and coupler antenna CC, in order to tune the RF characteristics of the booster antenna BA. **FIG. 4C** shows a design where the extension antenna EA is disposed along only one side of the coupler coil CC, or coupler antenna) and two sides of the card antenna CA. **FIG. 4D** shows the extension antenna EA disposed adjacent two sides of the coupler antenna (CC) and two sides of the card antenna CA.

A number of benefits may be attributable to the use of an extension antenna EA as a component of a booster antenna BA. Some variations of the extension antenna EA include how it is disposed with respect to the coupler coil CC component, as well as how it is disposed with respect to the card antenna CA component. The extension antenna EA may be a true coil, and is connected at at least one of its two ends to one or both of the coupler coil CC and card antenna CA. Its other end may also be connected to one or both of the coupler coil CC and card antenna CA, or may remain as a free end.

**FIG. 4E** is a diagram showing a booster antenna BA having a card antenna CA, a coupler coil CC and an extension antenna EA. These components may be formed (embedded in the card body CB) as one continuous embedded coil. The coupler coil CC is in the form of a closed loop.

The extension antenna EA (or extension coil, or extension loop) has one end extending from an end of the coupler coil CC, its other end is a free end. The extension antenna EA is disposed so as to have a portion adjacent two sides (or approximately 180°) of the coupler coil CC.

The card antenna CA may comprise one coil (without an inner winding IW and an outer winding OW as in some of the previous examples), and has a free end. In this example, the coupler coil CC is a true coil, and has a cross-over.

This design features a low number of turns at the perimeter of the card body CB below the embossing area (or "5^{th} line" of embossing). The extension antenna (EA) is disposed to have portions adjacent two sides of the coupler antenna (CC), and has a free end.

In this example, the extension antenna EA has one end extending from the coupler coil CC and its other end is a free end. The extension antenna EA is disposed along two sides of the coupler antenna (CC).

### Booster Antenna BA components disposed primarily in the top half of the Card Body CB

Reference is made to US 13600140 filed 30 Aug 2012 (now US 20130075477**),** particularly FIGs. 6A,B,C thereof, and also to US 61/697,825 filed 07 Sep 2012, particularly FIG. 6D thereof.

**FIG. 4G** is a diagram showing a booster antenna (BA) having a card antenna CA, a coupler coil CC and an extension antenna (EA). These components may be formed (embedded in the card body CB) as one continuous embedded coil.

The extension antenna EA has one end connected with an end of the coupler coil CC, its other end is a free end. The pitch (spacing between turns) of the extension antenna EA may be different than the pitch of the coupler coil CC. Both the extension antenna EA and coupler coil CC may have pitches different than that of the card antenna CA.

The coupler coil CC is shown as a "true" coil (closed loop), having a crossover. The extension antenna EA is connected at one end to one end of the coupler coil CC, the other end of the extension antenna EA is a free end (not connected to another booster antenna BA component. The extension antenna EA does not have a cross-over. The extension antenna EA may have a pitch (spacing between adjacent turns) which is different than that of the coupler coil CC, and the pitch can be selected in order to vary the capacitance of the extension antenna (EA) and hence tune the resonance frequency of the booster antenna (BA). The components of the booster antenna (BA) may be formed as a continuous wire embedded coil.

**FIG. 4H** is a diagram showing a booster antenna (BA) having a card antenna CA, a coupler coil CC and an extension antenna (EA). These components may be formed (embedded in the card body CB) as one continuous embedded coil.

The extension antenna EA has one end connected with an end of the coupler coil CC, its other end is a free end. The pitch (spacing between turns) of the extension antenna EA may be formed with varying pitches - for example, increasing in pitch towards its inner turns (versus its outer turns), for example a narrow pitch at the outer turns and a wider pitch at the inner turns of the extension antenna EA. The pitch of individual turns of the extension antenna EA may be adjusted to match the booster antenna (BA) resonance frequency.

**FIG. 4I** is an illustration of a booster antenna (BA) with card antenna CA, a coupler antenna (CC) and an extension antenna (EA). The antennas may be laid on the card body CB as a continuous embedded coil.

The extension antenna EA comprises two coils EA-1 and EA-2 which may be connected in series with one another, as shown. One end of the coil EA-1 is connected with an end of the coupler coil CC, the other end of the coupler coil CC may be a free end. The other end of the coil EA-2 is connected with a first end of the coil EA-2. The other end of the coil EA-2 is connected with an end of the card antenna CA, the other end of the card antenna CA is a free end. The two coils EA-1 and EA-2 of the extension antenna EA may be laid with the same sense (both clockwise), or with opposite senses (one clockwise, the other counter clockwise).

This concept can be applied to more than two extension antennas (EAs). The two or more extension antennas (EAs) may have independently different sizes, shapes, pitch and number of turns, and each one may have a varying (increasing or decreasing) pitch. The use of multiple extension antennas (EAs) allows for flexibility in the design of the extension antenna (EA) system in order to tune, including adjusting at least one of the inductance and the resonance frequency, of the booster antenna (BA). The use of multiple extension antennas (EAs) can ultimately improve the coupling between the booster antenna (BA) and the module antenna (MA).

In the various embodiments disclosed herein, the booster antenna BA may be a continuous embedded coil(s) of wire. All of the antenna components may be formed from a single continuous length of wire. Some of the components, or some portions thereof may be formed from conductive tracks other than wire, such as by additive (e.g., printing) or subtractive (e.g., etching) processes.

It should be understood that in various ones of the configurations for booster antennas shown herein that booster antennas other than **FIG. 2** type quasi-dipole (Q-D) booster antenna (BA) may be employed to achieve the desired enclosure of the antenna module AM and consequent improvements to coupling between the module antenna and the booster antenna.

### Some characteristics of the Booster Antenna and its components

The booster antenna BA and its various components may be formed of various size wire ranging, for example, from approximately 50µm to 112µm in diameter. A single continuous wire may be modified, such as with a conductive coating to have different diameters for different ones of the booster antenna components. Flat wire can also be used, and may be beneficial for booster antenna components which may extend into the embossing area (146). Wires having different resistances, or a single continuous wire having portions with different resistances may be used for the various components of the booster antenna.

The number of turns and the spacing of the turns of the booster antenna BA and its various components may be varied to control characteristics of the booster antenna BA and its performance.

### Distinguishing over some of the Prior Art

US 5,955,723 (Siemens; 1999) discloses a contactless chip card having a first conductor loop connected to the semiconductor chip and at least one second conductor loop with approximately the dimensions of the data carrier, and a region forming a third loop with approximately the dimensions of the first conductor loop. Inductive coupling is described.

In the Siemens patent, there is no disclosure of an additional antenna extension (EA), nor is there any disclosure of the conductor loops (comparable to the "booster antenna" BA described herein) components extending into the embossing area (146) or into the residual area (148) (or embossing are) of a card body (CB), as disclosed herein.

US 8,130,166 (Assa Abloy; 2012) discloses a coupling device being formed by a continuous conductive path having a central section in the form of a small spiral and two extremity sections which are formed as large spirals. The pitches of the large spirals are chosen such that the large spirals have mainly a capacitive behavior. The pitch of the small spiral is chosen such that the small spiral has mainly an inductive behavior.

In the Assa Abloy patent, the large spirals appear to be in the peripheral area (142), and the small spiral appears to be in the coupling area (144). There is no disclosure of an additional antenna extension (EA), nor is there any disclosure of the coupling device (comparable to the "booster antenna" BA described herein) components (small and large spirals) extending into the embossing area (146) or into the residual area (148) (or embossing are) of a card body (CB), as disclosed herein.

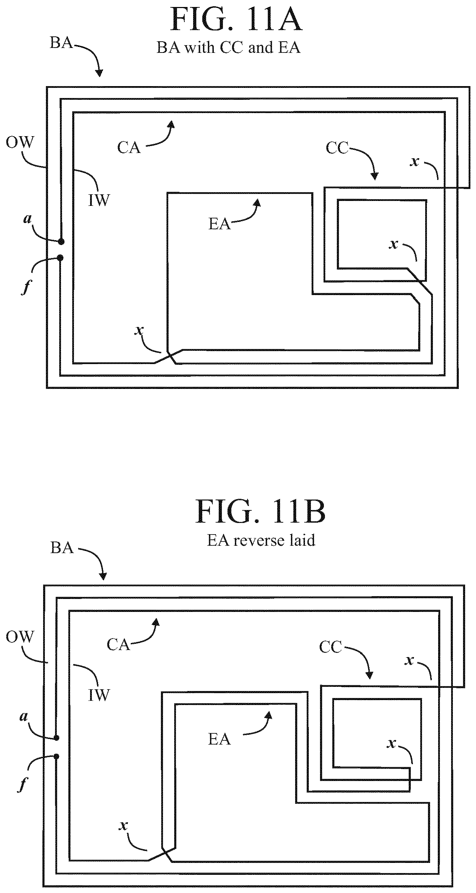

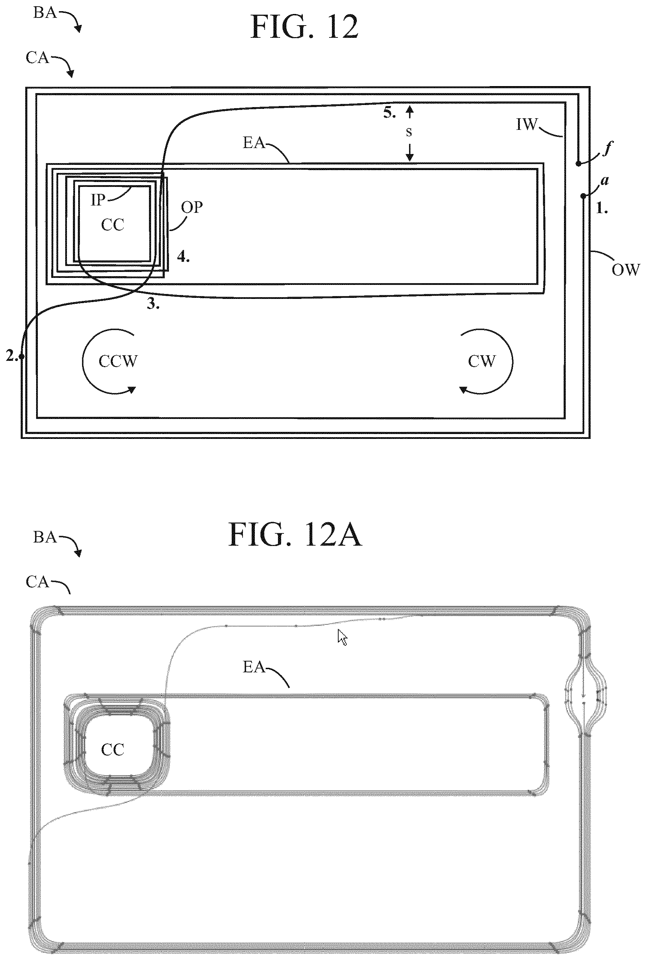

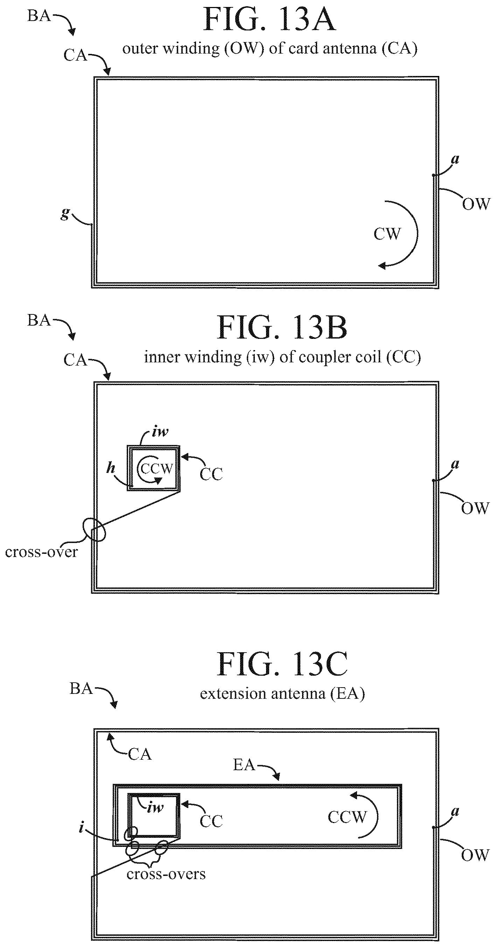

US 20130146671 (Infineon; 2013), discloses a booster antenna structure for a chip card, which may include an additional electrically conductive structure connected to the booster antenna. The additional electrically conductive structures disclosed therein are principally capacitive structures. FIG. 11A (for example) shows a booster antenna structure with a finger capacitor. FIG. 12A (for example) shows a booster antenna structure with a spiral capacitor. FIG. 12B (for example) shows a booster antenna structure with a dummy turn as capacitor. FIG. 13A shows a meander shape (the additional electrically conductive structure may have a meander structure). The structures which form the capacitor, and the booster antenna structure, may be arranged in the same plane. In this case, no additional structural layer is required in which one of the components is arranged separately, but both the structures forming the capacitor and the booster antenna structure may be formed in a forming process on the same layer, i.e. in the same plane, that is to say, for example, on one or on two sides of the carrier on which the booster antenna structure is arranged. The capacitor may also be configured as line capacitor and arranged, for example, as dummy turn. The dummy turn may have two conductor tracks extending next to one another, the winding direction of the two conductor tracks being opposite with respect to one another so that the dummy turn does not supply any or a negligible contribution to the inductance of the booster antenna structure.

The turns or tracks of the additional electrically conductive structure(s) in the Infineon publication do not cross over one another. Therefore, they do not form a "true" coil which would contribute to the inductance of the booster antenna. Compare US 8130166 (Assa Abloy; 2012) which shows (FIGs. 3, 5, 6 therein) crossovers for all of their spirals (booster antenna components). In the present invention, the antenna extension EA may be in the form of a "true" coil, involving at least one crossover, and contributes to the inductance of the booster antenna BA.

The Infineon publication discloses various embodiments, a booster antenna structure for a chip card is provided, wherein the booster antenna structure may include a booster antenna; and an additional electrically conductive structure connected to the booster antenna. Attention may be directed to FIGs. 7, 8B, 9, 12A, 12B, and 13-15 therein, wherein:
FIG. 7 shows a section of a booster antenna structure according to various embodiments;
FIG. 9 shows a circuit diagram of a system of reading unit and a contactless chip card module arrangement according to various embodiments;
[0087] FIG. 9 shows a circuit diagram 900 of a system having a reading unit 902 (also called PCD (proximity coupling device)) and a contactless chip card module arrangement 904 (also called PICC (proximity integrated circuit card)) ... The chip card module 908 has an off-chip coil 918 which is connected to the chip which is modeled by a parallel circuit of an on-chip capacitor 920 and an on-chip resistor 922, the latter representing the ohmic consumption of the chip ... The booster antenna structure 906 is represented by a resonant circuit in the form of a series circuit which has a booster antenna coil 912, a booster capacitor 914 and an additional electrically conductive structure, for example a booster resistor 916. In the circuit of the booster antenna structure 906, the booster resistor 916 may also be connected alternatively in parallel with the arrangement which has the booster antenna coil 912 and the booster capacitor 914.
   Claim 1 is directed to A booster antenna structure for a chip card, wherein the booster antenna structure comprises: a booster antenna; and an additional electrically conductive structure connected to the booster antenna.
FIG. 12A shows a booster antenna structure according to various embodiments with a spiral capacitor;
FIG. 12B shows a booster antenna structure according to various embodiments with a dummy turn as capacitor;
A further possible form which the capacitance can have is shown in FIG. 12A. To illustrate, the booster antenna structure 1200 is here also represented by only one turn 1202 and connected to a spiral capacitor 1204. A spiral capacitor 1204 may be understood in various embodiments to be a capacitor which has two conductor tracks forming a conductor track string and extending next to one another, the conductor track string being rolled together to form a spiral. In this arrangement, the spiral does not need to have a circular shape, it can also be oval or a polygon having rounded corners. The capacitance value of the spiral capacitor is adjustable, for example by adapting parameters which have already been mentioned in conjunction with the finger capacitor.
Another further possible shape which the capacitance can have is shown in **FIG. 12B.** The booster antenna structure 1210 has three turns 1212 in this case. Furthermore, the end of the inner turn of the turns 1212 of the booster antenna structure 1210 is followed by an inductive coupling area 1216 which is surrounded by coupling turns 1218. The, for example, three coupling turns 1218 are here formed from an extension of one end of an inner turn of the turns 1212 of the booster antenna structure 1210. The end of the conductor track formed by the coupling turns 1218 is followed by a dummy turn 1214 which forms the capacitor. The dummy turn 1214 has two conductor tracks extending in parallel next to one another, the first conductor track 1220 being coupled to the end of the conductor track which forms the coupling turns 1218 and the second conductor track 1222 being coupled to the end of the outer turn of the turns 1212 of the booster antenna structure 1210. The first conductor track 1220 and the second conductor track 1222 have an opposite direction of circulation with respect to one another. The ends of the first conductor track 1220 and of the second conductor track 1222 are open or are not connected to any other structure analogously to the end of the conductor track double string which forms the spiral capacitance 1204 in FIG. 12A. The double string which is formed by the first conductor track 1220 and the second conductor track 1222 as such has two turns, wherein its course can deviate from the course shown in FIG. 12B and can be matched to unoccupied areas in the plane of the booster antenna structure 1210 or to areas to be kept free which, for example, are reserved for embossed lettering.

### Controlling Force and Ultrasonic Power during Wire Embedding

An embedding head (or tool) for embedding the wire for the booster antenna BA and its various components in the substrate may comprise an ultrasonic transducer (or sonotrode) vibrating a capillary tube through which the wire being embedded extends (or is fed) onto the surface of the substrate. By imparting an ultrasonic vibration of the tool while applying a downward force (urging the tool downward, with a force), the wire may be caused to embed itself, at least partially, into the surface of the card body CB substrate. Reference may be made to US 6,698,089 (2004; Finn et al) and US 6,233,818 (2001; Finn et al), which disclose embedding wire in a substrate using a sonotrode. See, for example, **FIGs. 1** **and** **3** of the '089 patent.

The booster antenna (BA) (and any of its components CA, OW, IW, CC, AE) may comprise several turns of wire embedded very close to one another. When embedding the several turns of a booster antenna (BA), notably the peripheral card antenna (CA) portion thereof, it may be appreciated that the first turn of wire may be embedded in the "native" substrate of the card body (CB), and may interfere (resisting or blocking, in a manner of speaking) with the embedding of subsequent turns of the booster antenna (BA).

### Capacitive Stubs

US 13931828 filed 29 June 2013 **(**US 20130299598, 14 Nov 2013; **"S34c1)** discloses an antenna module (AM) for a transponder (or smartcard, or secure document) including a module antenna (MA) comprising a main antenna structure ("A") and two additional antenna structures ("B", "C") connected to the main antenna structure and functioning as "capacitive stubs".

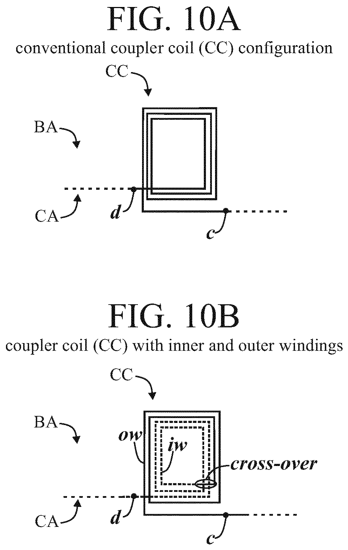

**FIGs. 10A****, B, C** are diagrams of some coupler coil (CC) configurations for a booster antenna (BA). The coupler coil CC may be configured in various ways to increase a coupling factor between the coupler coil CC component of the booster antenna BA and the module antenna MA of the antenna module AM.

**FIG. 10A** shows a configuration of a conventional (typical) coupler coil CC in the form of a flat coil having number (such as ten) of turns, and two ends "***c***" and "***d***". The booster antenna BA extending around the periphery of the card body is illustrated with only one turn, for illustrative clarity. The coupler coil CC may have, for example, approximately 10 turns of wire, in a flat spiral pattern.

**FIG. 10B** shows a coupler coil CC having inner and outer windings. Starting at one end *"**d**"* of the coupler coil CC, an inner winding ***iw*** (or inner portion **IP,** shown in dashed lines) has approximately 5 turns of wire and is wound (laid) in a counter clockwise direction from outside-to-inside, then jumps over itself (over previously laid turns) at a "cross-over", and an outer winding ***ow*** (or outer portion **OP,** shown in solid lines) has approximately 5 turns of wire and is wound (laid) in a counter clockwise direction from inside to outside, then terminates at the other end ***"c".*** It should be understood that the coupler coil CC could be wound from ***"c"** to "**d**"*, rather than from ***"d"*** to ***"c",*** and other variations may be implemented. The inner and outer windings ***iw*** and ***ow*** may have substantially the same number of turns, five each. Fewer turns are shown in the figure, for illustrative clarity.

### Some Configurations of Booster Antenna (BA) Components

**FIGs. 11A - 11F** show various exemplary configurations of a booster antenna **BA.**

The booster antenna **BA** comprises various antenna components, namely (but not limited to):
- a card antenna **CA** component extending around a periphery of the card body (CB, not shown, see **FIG. 1****)** for coupling with an external contactless reader (see **FIG. 1****),**
- the card body **CA** component comprising an outer winding **OW** and an inner winding **IW** (see **FIG. 1B),**
- a coupling coil **CC** component disposed at an interior position (area) of the card body (CB), corresponding with a position for the antenna module (AM, not shown) for coupling with the module antenna (MA, not shown) of the antenna module (AM), and
- an extension antenna (or extension coil) **EA** component.

The components **CA, CC, EA** of the booster antenna **BA** may be interconnected, as shown. The components of the booster antenna may comprise wire which is laid in a continuous path, from a starting point *"**a**"* to a finishing point *"**f**"* (or vice-versa). In some of the examples, the "sense" or laying direction (either clockwise **CW,** or counter clockwise **CCW)** of the various components may be the same, or different than (e.g., opposite from) the sense of other components. Some of the components may be "true coils" which may form a complete loop having a crossover **"*x*"** and contributing to the inductive coupling of the booster antenna **BA.** The overall booster antenna **BA** may have two or more crossovers **"*x*".** The various components may each be shown with only a few turns, for illustrative simplicity, and are generally laid in a flat rectangular spiral pattern having a number (generally two or more) "turns". One of the turns, or a portion thereof, may be an "innermost" turn of the booster antenna component. Another of the turns, or a portion thereof, may be an "outermost" turn of the booster antenna component.

Some characteristics and advantages of the various configurations shown in **FIGs. 11A - 11F** include, but are not limited to ...
- altering the Q-factor of the booster antenna/module antenna system by altering the winding direction of one or more components (elements) making up the booster antenna BA
- winding one or more turns of the coupler coil CC in the opposite direction to the majority of the turns, with substantially no increase in DC resistance, but counter-winding may broaden the resonance curve and reduce Q-factor, and there may be no power loss as would be the case if a resistor introduced
- winding one or more turns of the booster antenna BA in the opposite direction to the majority of the turns
- winding one or more turns of the extension antenna EA in the opposite direction to the other extension antenna EA turns, or winding the entire extension antenna EA in the opposite direction to the inner and outer windings (IA, OW) of the booster antenna BA.

**FIG. 11A** shows a configuration for the booster antenna BA wherein from the starting point *"**a**"*, the wire commences being laid in a clockwise **CW** direction forming outer windings (OW) of the card antenna CA (from an innermost turn to an outermost turn), then crosses over **"*x*"** itself and heads towards the interior of the card body (CB) whereat the coupler coil CC may be formed with turns of wire laid in the counter clockwise **CCW** direction (from an outermost turn to an innermost turn), then crosses over **"*x*"** itself and heads towards the periphery of the card body (CB) for laying the extension antenna EA in a clockwise **CW** direction (from an outermost turn to an innermost turn), then the wire crosses over, then crosses over "***x***" itself and heads towards the periphery of the card body (CB) for laying the inner windings (IW) of the card antenna CA which may be laid in a clockwise **CW** direction (from an innermost turn to an outermost turn), until the finishing point "***f***". The entire sequence may be performed in reverse, starting at the point *"**f**"* and finishing at the point *"**a**".*

**FIG. 11B** shows a configuration for the booster antenna BA wherein from the starting point *"**a**"*, the wire commences being laid in a clockwise **CW** direction forming outer windings (OW) of the card antenna CA (from an innermost turn to an outermost turn), then crosses over **"*x*"** itself and heads towards the interior of the card body (CB) whereat the coupler coil CC may be formed with turns of wire laid in the counter clockwise **CCW** direction (from an outmost turn to an innermost turn), then crosses over **"*x*"** itself and heads towards the periphery of the card body (CB) for laying the extension antenna EA in a counter clockwise **CCW** direction (from an outermost turn to an innermost turn), then the wire crosses over, then crosses over "x" itself and heads towards the periphery of the card body (CB) for laying the inner windings (IW, compare FIG. 1B) of the card antenna CA which may be laid in a clockwise **CW** direction (from an innermost turn to an outermost turn), until the finishing point *"**f**"*. The entire sequence may be performed in reverse, starting at the point *"**f**"* and finishing at the point *"**a**".*

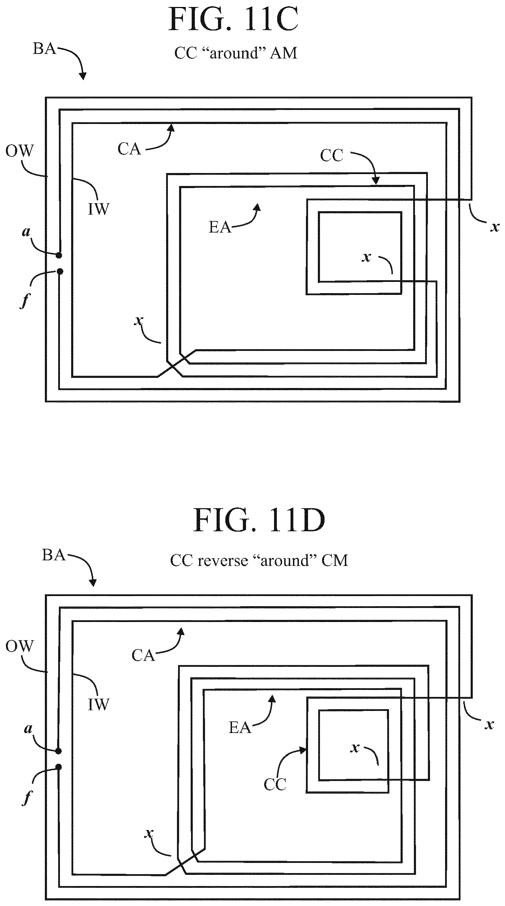

**FIG. 11C** shows a configuration for the booster antenna BA wherein from the starting point *"**a**"*, the wire commences being laid in a clockwise **CW** direction forming outer windings (OW) of the card antenna CA (from an innermost turn to an outermost turn), then crosses over **"*x*"** itself and heads towards the interior of the card body (CB) whereat the coupler coil CC may be formed with turns of wire laid in the counter clockwise **CCW** direction (from an outermost turn to an innermost turn), then the wire crosses over **"*x*"** itself and heads towards the periphery of the card body (CB) for laying the extension antenna EA in a clockwise **CW** direction (from an outermost turn to an innermost turn), then the wire crosses over **"*x*"** itself and heads towards the periphery of the card body (CB) for laying the inner windings (IW) of the card antenna CA which may be laid in a clockwise **CW** direction (from an innermost turn to an outermost turn), until the finishing point *"**f**"*. The entire sequence may be performed in reverse, starting at the point *"**f**"* and finishing at the point *"**a**".*

**FIG. 11D** shows a configuration for the booster antenna BA wherein from the starting point *"**a**"*, the wire commences being laid in a clockwise **CW** direction forming outer windings (OW) of the card antenna CA (from an innermost turn to an outermost turn), then crosses over "x" itself and heads towards the interior of the card body (CB) whereat the coupler coil CC may be formed with turns of wire laid in the counter clockwise **CCW** direction (from an outermost turn to an innermost turn), then the wire crosses over **"*x*"** itself and heads towards the periphery of the card body (CB) for laying the extension antenna EA in a counter clockwise **CCW** direction (from an outermost turn to an innermost turn), then the wire crosses over **"*x*"** itself and heads towards the periphery of the card body (CB) for laying the inner windings (IW) of the card antenna CA which may be laid in a clockwise CW direction (from an innermost turn to an outermost turn), until the finishing point *"**f**"*. The entire sequence may be performed in reverse, starting at the point *"**f**"* and finishing at the point *"**a**".*

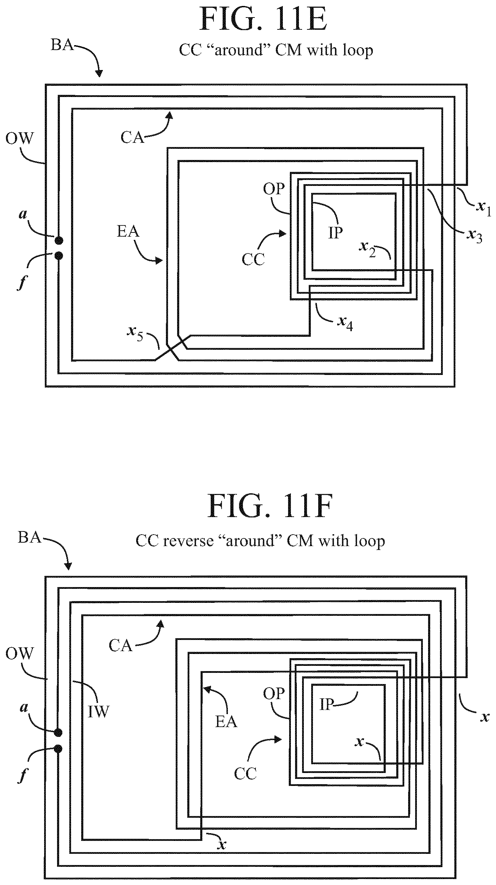

**FIG. 11E** shows a configuration for the booster antenna BA wherein from the starting point *"**a**"*, the wire commences being laid in a clockwise **CW** direction forming outer windings (OW) of the card antenna **CA** (from an innermost turn to an outermost turn), then crosses over "***x***" (x₁) itself and heads towards the interior of the card body **(CB)** whereat an inner portion **IP** of the coupler coil **CC** may be formed with turns of wire laid in the counter clockwise **CCW** direction (from an outermost turn to an innermost turn), then the wire crosses over **"*x"*** (x₂) itself and heads towards the periphery of the card body (CB) for laying the extension antenna EA in a clockwise **CW** direction (from an outermost turn to an innermost turn), then the wire crosses over "*x*" (x₃) itself for laying an outer portion OP of the coupler coil CC with turns of wire laid in the clockwise **CW** direction (from an outermost turn to an innermost turn), then the wire crosses over "*x*" (x₄, x₅) itself and heads towards the periphery of the card body (CB) for laying the inner windings **(IW,** compare FIG. 1B) of the card antenna CA which may be laid in a clockwise **CW** direction (from an innermost turn to an outermost turn), until the finishing point *"**f**"*. The entire sequence may be performed in reverse, starting at the point *"**f**"* and finishing at the point *"**a**".*

**FIG. 11F** shows a configuration for the booster antenna BA wherein from the starting point **"a",** the wire commences being laid in a clockwise **CW** direction forming outer windings (OW) of the card antenna CA (from an innermost turn to an outermost turn), then crosses over **"x"** itself and heads towards the interior of the card body (CB) whereat an inner portion **IP** ("***iw***") of the coupler coil CC may be formed with turns of wire laid in the counter clockwise **CCW** direction (from an outermost turn to an innermost turn), then the wire crosses over **"x"** itself for laying the extension antenna EA in a counter clockwise **CW** direction (from an outermost turn to an innermost turn), then the wire crosses over **"*x*"** itself for laying an outer portion **OP** *("ow")* of the coupler coil CC with turns of wire laid in the counter clockwise **CCW** direction (from an outermost turn to an innermost turn), then the wire crosses over **"x"** itself and heads towards the periphery of the card body (CB) for laying the inner windings (IW) of the card antenna CA which may be laid in a clockwise **CW** direction (from an innermost turn to an outermost turn), until the finishing point **"f".** The entire sequence may be performed in reverse, starting at the point **"f"** and finishing at the point **"a".**

The following table presents the "laying" senses of the various components CA (OW, IW), CC, EA of the booster antenna BA. (The OW and IW may have the same sense as one another.)

| | **OW of CA** | **CC** | **EA** | **IW of CA** |
|---|---|---|---|---|
| **FIG. 11A** | CW | CCW | CW | CW |
| **FIG. 11B** | CW | CCW | CCW | CW |
| **FIG. 11C** | CW | CCW | CW | CW |
| **FIG. 11D** | CW | CCW | CCW | CW |
| **FIG. 11E** | CW | (IP) CCW | CW | CW |
| | | (OP) CW | | |
| **FIG. 11F** | CW | (IP) CCW | CCW | CW |
| | | (OP) CCW | | |

Although not specifically directed to the antenna module AM, the configurations of and improvements to booster antennas disclosed herein may provide for improved coupling of the booster antenna BA with the antenna module AM, and consequent improvements in "read distance" and "activation distance".

According to some embodiments (examples) of the invention, a booster antenna (BA) comprises a card antenna (CA) component disposed around a periphery of a card body (CB) and comprising an inner winding (IW) and an outer winding (OW); a coupler coil (CC) component disposed at a location for an antenna module (AM) on the card body (CB); and an extension antenna (EA) component; and may be characterized in that: at least one of the components is laid having a sense which is opposite one or more of the other components. At least some of the components may have innermost and outermost turns; at least one of the components is laid from an innermost turn to an outermost turn; and at least another of the components is laid from an outermost turn to an innermost turn.

### Some Additional Embodiments of the Booster Antenna (BA)

**FIG. 12** shows diagrammatically, and **FIG. 12A** shows more "realistically", an exemplary embodiment of a booster antenna BA comprising a card antenna CA component having an inner winding IW and an outer winding OW, a coupler coil component CC having an inner portion IP (or inner winding "iw") and an outer portion OP (or outer winding "ow"), and an extension antenna EA component. (The extension antenna EA in this embodiment is shown having a single multi-turn winding, but it could be formed with an inner and outer winding.)

The booster antenna BA may comprise insulated wire, embedded in the card body CB. Each component may have a number of turns, non-limiting examples of which are given. The booster antenna BA may be laid (embedded), as follows. The number of turns, sense (clockwise, counter clockwise), and order of laying the turns and/or windings of the various booster antenna BA components - such as the inner winding IW and outer winding OW of the card antenna CA component, the inner portion IP and outer portion OP of the coupler coil CC component, and the inner and outer windings of the extension antenna EA component) - are exemplary, and may be changed, reversed, or done in a different order. A booster antenna BA formed by an additive or subtractive process, resulting in traces of conductors, may exhibit a similar arrangement to the embedded wire-based booster antenna BA described herein.

In a first step **(1),** at a point "***a***" which may be a first end of the overall booster antenna **BA,** start laying (routing, embedding) the outer winding **OW** of the card antenna **CA** component in a clockwise **CW** direction, for 3 or 4 turns around (just inside of) the perimeter of the card body CB, from an innermost turn to an outermost turn thereof. (The diagrammatic view of **FIG. 12** may show fewer number of turns, for the various booster antenna components, for illustrative clarity.)

In a next step **(2),** stop embedding, jump over the already laid turns of the outer winding **OW,** to the interior (coupling area, 144) of the card body **CB,** and lay the inner portion **IP** (or inner winding "***iw***") of the coupler coil **CC** component in a counter clockwise **CCW** direction, such as for 8 - 10 turns, from an outermost turn to an innermost turn thereof.

In a next step **(3),** the wire may be lifted (jump) over the already laid inner portion **IP** of the coupler coil **CC** component to start forming the extension antenna **EA** component by laying the wire in a counter clockwise **CCW** direction, from an outermost winding to an innermost winding thereof. The extension antenna **EA** component may have 4 turns, and may be routed around a central position of the card body **CB,** substantially as illustrated, and maintained at a given distance "s" from the card antenna CA component, so as to be substantially symmetrical (from left-to-right, as viewed).

In a next step **(4),** having completed laying the extension antenna EA component, the embedding process continues around the already laid inner portion **IP** of the coupler coil **CC** component, forming an outer portion **OP** (or outer winding **"*ow*")** of the coupler coil **CC** component, with a counter clockwise **CCW** sense (laying direction), and having 5 turns, around the exterior of the inner portion **IP** of the coupler coil CC component, from an outermost winding to an innermost winding thereof. In this example, the inner portion **IP** and outer portion **OP** of the coupler coil **CC** component have the same sense **(CCW).** Alternatively, the inner portion **IP** and outer portion **OP** of the coupler coil **CC** component may be laid with opposite sense (one **CW,** the other **CCW).** The order of laying the inner portion **IP** and outer portion **OP** of the coupler coil CC component may also be switched (first lay the outer portion OP, then the extension antenna **EA,** then the inner portion IP). Or, lay both the inner portion **IP** and outer portion **OP** of the coupler coil **CC** component, without "interrupting" by laying the extension antenna **EA** component.

In a next step (5), after completion of the outer portion **OP** of the coupler coil **CC** component, the antenna wire is routed to the perimeter of the card body **CB** to lay the inner winding **IW** of the card antenna **CA** component in a clockwise **CW** direction, having 3 or 4 turns, from an innermost winding to an outermost winding thereof. Embedding may stop, as a point "**f**". Compare **FIG. 2****,** the points *"**a**"* and "***f***" represent free (not connected) ends of the booster antenna **BA,** which otherwise is a continuous winding of the various components **(CA, CC, EA).** In this example, the inner winding **IW** and outer winding **OW** of the card antenna **CA** component have the same sense **(CW).** Alternatively, the inner winding **IW** and outer winding **OW** of the card antenna **CA** component may be laid with opposite sense (one **CW,** the other **CCW).** The inner winding **IW** and outer winding **OW** of the card antenna **CA** component may also be switched (first lay the outer portion OP, then the extension antenna EA, then the inner portion IP).

**FIGs. 13A - 13E** illustrate an example of laying the booster antenna (BA), step-by-step, or component (and portion thereof) - by - component. For example:
- **(****FIG. 13A****)** in a first step, the outer winding **OW** of the card antenna CA component is laid, starting at a point *"**a**"*, which is a free end of the booster antenna BA, and proceeding a number of turns around (but spaced inside of) the outer perimeter of at least a portion of the card body CB (card body omitted, for illustrative clarity), in a clockwise CW direction, from an inner turn to an outer turn thereof, to a point **"*g*"** which is an interim point (rather than an end point);
- **(****FIG. 13B****)** in a next step, crossing over the already laid turns of the outer winding OW of the card antenna CA component, then forming the inner winding ***iw*** of the coupler coil CC component by laying the wire in a counter-clockwise CCW direction from an outer turn to an inner turn thereof, to a point **"*h*"** which is an interim point (rather than an end point);
- **(****FIG. 13C****)** in a next step, crossing over the already laid turns of the inner winding ***iw*** of the coupler coil CC component, then forming at least a portion of the extension antenna EA component by laying the wire in a counter-clockwise CCW direction from an outer turn to an inner turn thereof, to a point "***i***" which is an interim point (rather than an end point); (In this step, the turns of the extension antenna EA component may cross over the wire coming from the coupler coil CC component and the wire coming from the outer winding OW of the card antenna CA component.)

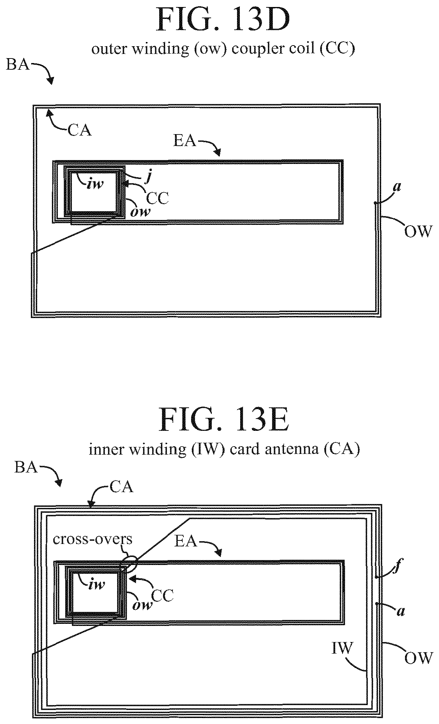

- **(****FIG. 13D****)** in a next step, crossing over the wire leading to the inner winding ***iw*** of the coupler coil CC component, then forming the outer winding ow of the coupler coil CC component around the inner winding ***iw*** of the coupler coil CC component by laying the wire in a counter-clockwise CCW direction from an outer turn to an inner turn thereof, to a point "***j***" which is an interim point (rather than an end point);
- **(****FIG. 13E****)** in a next step, crossing over the already laid extension antenna EA component, then forming the inner winding **IW** of the card antenna CA component by laying the wire in a clockwise CW direction from an inner turn to an outer turn thereof, to a point "***f***" which is a free end of the booster antenna BA.

A booster antenna (BA) may incorporate one or more of the following features or characteristics, and may be formed by one or more of the following steps (which may be performed in the sequence set forth herein, or in another sequence):
starting from one end (a), the outer winding (OW) of the card antenna (CA) component may be laid in a clockwise (CW) direction, for approximately 3 or 4 turns around (just inside of) the perimeter of the card body (CB), from an innermost turn to an outermost turn thereof;
the inner winding (iw) of the coupler coil (CC) may be laid in a counter clockwise (CCW) direction, such as for approximately 8 - 10 turns, from an outermost turn to an innermost turn thereof;
the extension antenna (EA) component may be laid in a counter clockwise (CCW) direction, for approximately 4 turns, from an outermost winding to an innermost winding thereof;
the extension antenna (EA) may be routed around a central position of the card body CB; the extension antenna EA is maintained at a given distance "s" from the card antenna CA component, so as to be substantially symmetrical;
the outer winding (ow) of the coupler coil (CC) component may be laid in a counter clockwise (CCW) direction for approximately 5 turns around the inner winding (iw) of the coupler coil (CC) component, from an outermost winding to an innermost winding thereof;
the inner winding (IW) of the card antenna (CA) component may be laid in a clockwise CW direction, having approximately 3 or 4 turns, from an innermost winding to an outermost winding thereof
depending on the shape of the module antenna (MA) of the antenna module (AM), the coupler coil (CC) component may be formed by embedding 8 to 10 turns of wire from its outermost to its innermost turn;
any of the components (or portions thereof) may be laid with a reverse sense (such as clockwise rather than counter clockwise);
the components (or portions thereof) may be laid in a different order;
the components (or portions thereof) may be formed by a pattern of conductive tracks, rather than embedded wire;
the coupler coil (CC) component may have a rectangular, oval, round or elongated shape;
iron or ferromagnetic particles or flakes may be selectively deposited in areas between the antenna components;
the booster antenna (BA) may have a resonance frequency at or below 13.56 MHz;
holographic metal foils may be incorporated into the inlay (card body CB);
the holographic metal foils may not significantly attenuate the electromagnetic field;
the holographic metal foils may generate capacitance to improve communication performance of the smart card with an external reader;
the holographic metal foils may mask the presence of the booster antenna (BA);
one or more turns on the coupler coil (CC) component may be routed in an area directly beneath an antenna module (AM).

### Another embodiment of the booster antenna BA

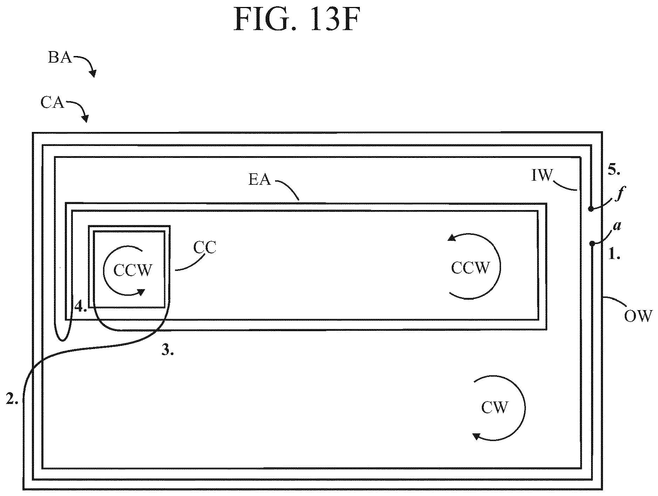

**FIG. 13F** illustrates another embodiment of a booster antenna BA. Some comparisons may be made with the embodiments shown in **FIGs. 4A-4E****,** **12****,** **12A****,** and **13A-13E**, and this embodiment may incorporate various features and variations shown and described therein, or elsewhere, although each and every feature and variation may not be shown in this figure.

The booster antenna BA may comprise:
- a card antenna CA portion comprising an outer winding OW and an inner winding IW, each winding having a number of turns, but may comprise only a single winding. The outer and inner windings may have the same or a different sense (CW, CCW) than one another. The turns of the outer and inner windings may have the same or a different pitch as one another, and may be constant or varying.
- a coupler coil CC component comprising a single multi-turn winding having a cross-over, but which may alternatively be formed with an inner winding or portion (iw, IP) and an outer winding or portion (ow, or OP). The coupler coil CC component is shown formed as a "true coil" (compare **FIGs. 4B****, E, G),** having a cross-over, but may alternatively be formed as an "open loop" (compare **FIGs. 4A****, C, D).**
- an extension antenna EA component comprising a single multi-turn winding having a cross-over, but which may alternatively be formed with inner and outer windings (in a manner similar to that of the card antenna CA and coupler coil CC portions of the booster antenna BA).

As illustrated, the booster antenna BA may be formed by (some illustrative steps "1" to "5"):
1. starting at the free end "a" of the card antenna CA component, laying the wire for the outer winding OW, in a clockwise CW direction, from an innermost turn to an outermost turn thereof, around (just within) the periphery of the card body CB (not shown),
2. then, crossing over the already laid turns of the outer winding OW of the card antenna CA component, heading towards the interior of the card body CB and commencing laying the wire for the coupler coil CC component, in a counter-clockwise CCW direction, from an outermost turn to an innermost turn thereof,
3. then, crossing over the already laid turns of the coupler coil CC component, commencing laying the wire for the extension antenna EA component, in a counter-clockwise CCW direction, from an outermost turn to an innermost turn thereof,
4. then, crossing over the already-laid turns of the extension antenna EA component, heading back towards the periphery of the card body CB and commencing winding the inner winding IW of the card antenna CA component in a clockwise CW direction, from an innermost turn to an outermost turn thereof, within the already laid outer winding OW,
5. finishing laying of the wire for the booster antenna BA at the free end "f", which may be (but need not be) close to the other free end "a".

The coupler coil CC of any of the booster antenna BA components disclosed herein may have a rectangular, oval, round or elongated shape (depending on the shape of the module antenna of the antenna module) and is formed by embedding 8 to 10 turns of wire from the outer to the inner position.

The extension antenna EA may have inner and outer windings. The coupler coil (CC) component may have inner and outer windings. The card antenna (CA) component may have inner and outer windings. Any of the components mentioned herein (CA, CC, EA) may have at least one winding in addition to its inner and outer windings.

The routing directions as indicated above can be in the reverse order. The various components (CA, CC, EA) of the booster antenna (BA), including portions thereof, may be laid from an innermost turn thereof to an outermost turn thereof, or from an outermost turn thereof to an innermost turn thereof.

The number of turns for a given component (CA, CC, EA) of the booster antenna (BA), including portions thereof, may change with the size of the booster antenna (BA). The extension antenna (EA) component may have approximately four turns.

The order of laying the windings of any of the booster antenna BA components disclosed herein may be performed in an order other than that which is described, for example, starting at the free end "***f***" and finishing at the free end *"**a**".*

The order of laying the wire from an innermost to an outermost turn (or vice-versa) may be performed in the reverse order, such as from outermost to innermost turn (or vice-versa).

The electrical resistance and/or material of the wire (or other electrical conductor) forming the windings of any of the booster antenna BA components disclosed herein may be uniform, or may varied along the length of the card antenna CA portion.

The booster antenna BA design of this embodiment, in a dual interface card, may exhibit the property that the card can be interrogated by scrolling across a point-of-sale terminal without loss or impairment of the data.

The sense (counter clockwise) of the extension antenna EA being opposite to the sense (clockwise) of the card antenna CA may beneficially reduce the "Q" (quality) of the booster antenna BA, may increasing the bandwidth of the booster antenna BA, and may stabilize the resonance frequency of the booster antenna. It may be noted that the sense (CCW) of the coupler coil (CC) component may be the same as the sense (CCW) of the extension antenna (EA) component.

Most important is (1) because (2) and (3) are a result of this. Systems with high quality tend to be instable and the deviation of the resonance frequency of a transponder site is high. A stable resonance frequency is beneficial in the production since the results can be reproduced.

A reduced quality (1) causes a broader bandwidth (2) which is an enhancement of data communication because high speed transition signals need a broad bandwidth in order to avoid distortion of the signal.

### Some additional features

Iron or ferromagnetic particles or flakes could be selectively deposited in the areas between the antenna.

The booster antenna BA may be tuned, after lamination, to be below the resonance frequency of 13.56 MHz, rather than above.

Holographic metal foils may be glued or laminated to both sides of the booster antenna BA inlay (card body DB). The holographic metal foils may not significantly attenuate the electromagnetic field, in other words the holographic metal foils may be largely transparent to the RF field. The holographic metal foils can be used to mask (visually hide) the presence of the booster antenna BA. In addition, the holographic metal foils when placed either side (above, below) of the booster antenna BA can generate capacitance which may help improve the communication performance of the smart card with the reader **(****FIG. 1****).**

One or more turns on the coupler coil CC can be routed in the area directly beneath the antenna module AM. Placing some turns of the coupler coil CC directly under the antenna module AM, and consequently close to the module antenna MA, may increase the coupling between the booster antenna BA and the antenna module AM, resulting in improved power delivery to the chip IC (CM), thereby improving smart card performance.

### Metal Foil Layer(s)

Metal foils, metallic coatings, segments of metal foil or metal particles may be deposited on or embedded in the inlay (or card body CB) to alter the electrical characteristics of the RFID device or smartcard. A metal foil layer in the card body construction may helps to meet the ISO and EMV communication standards for RFID devices or smart cards in terms of read write distance, baud rate, Q-factor bandwidth, etc. The metal foil can be any pure metal such as aluminum or copper or an alloy. The metal foils, metallic coatings, segments of metal foil or metal particles should have a thickness less than the skin depth of the metal or material being used in order to prevent the formation of eddy currents in the metal or metallic structure that will attenuate the RF electromagnetic field. The use of thicknesses substantially less than the skin depth of the metal or material being used will increase the electrical resistance of the structure to alternating current flows (impedance) thereby preventing unwanted or excessive attenuation of the RF electromagnetic field. Other electrical conductors such as metal nanoparticles, metal nanowires or carbon-based conductors like graphite or exfoliated graphite can be used to construct electrically conductive networks that are hereby included under the definition of a metal foil or metallic structure.

The booster antenna (BA) is normally constructed from a track of wire embedded in an inlay substrate (or card body CB) comprising one or more layers of a material such as Polyvinyl Chloride (PVC), Polycarbonate (PC), Polyethylene (PE), Poly(ethylene terephthalate) (PET), Polyetherurethane, PET-G (Polyethylene Terephtalate Glycol-modified), Polyester Copolymer film, Teslin^{™}, paper, synthetic paper and the like. Alternatively, the booster antenna (BA) can be formed on the inlay substrate by chemically or laser etching a metal coating previously deposited on the substrate. A particular design of booster antenna (BA) with coupler coil (CC), having a certain geometry and number of coil windings, will exhibit specific electrical characteristics in terms of resonance frequency and impedance.

The metallic/metallized foil in the card stackup may exhibit "capacitive coupling" with the booster antenna (BA) to broaden the bandwidth of the Gaussian curve to include the side bands and to reduce the concentration of the electromagnetic flux at the position of the coupler coil CC (i.e. to avoid overpowering the RFID chip). This may improve the communication of signals carried between the RFID device (secure document or smartcard) and the reader on the sub-carrier frequencies (the sub-carrier frequencies is typically +/- 848 kHz at 12.712 MHz and 14.408 MHz for a device operating at 13.56 MHz, as per ISO/IES 14443-2).

The metal foil or metallic structure can advantageously alter (such as lower) the quality factor (Q) of the booster antenna (BA). The metal foil or metallic structure can also have a capacitive effect in the circuit. The presence of the metal foil or metallic structure in the card design can alter the electrical power delivered to the IC chip (CM). Some or all of these effects may enhance the performance of the RFID device or smartcard, improving the coupling between the antenna module AM and the coupler coil CC of the booster antenna BA. The communication between the RFID device or smartcard and the reader can thus be improved.

The metal foil MF together with the booster antenna BA generates capacitance in the resonant circuit which may result in a broadening of the resonance curve and which may improve signal communication on the sub-carrier frequencies, typically at 12.712 MHz and 14.408 MHz (i.e. +/- 848 kHz for a device operating at 13.56 MHz).

A metal foil, metal coating or metal particles can be implemented in the RFID device or smartcard in a number of ways. A very thin continuous metal foil can be deposited directly on top of the booster inlay (card body CB), behind the booster inlay or within the booster inlay structure. The metal foil can be supported on a plastic substrate, such as Poly(ethylene terephthalate) (PET), before being incorporated into the booster antenna structure.

As an alternative to a continuous metal foil, a perforated (or otherwise segmented or discontinuous) metal foil can be used. The perforations may allow the electromagnetic flux from the RFID reader to substantially penetrate the card body (CB). The perforated foil can be deposited anywhere within the card body, as described above. The thickness of a perforated foil may be greater than the thin continuous foils described above - for example, greater than 15nm. (A continuous metal foil may have a thickness less than 15nm.)

As an alternative to a continuous metal foil, a metal mesh can be used. The mesh can be deposited anywhere within the card body as described above. The metal mesh can also be constructed of a porous network

Metal particles of various sizes and shapes (including spheres and flakes) can be deposited on the surface of the booster antenna (BA) or an additional inlay layer within the card body. The metal particles can be formed a range of materials including metal alloys and can be deposited within the material used to form the inlay or other layers within the card body. The metal particles can also be derived from a conventional metallic finish on the surface of the card.

The metal foil MF or metallic structure can cover the full area of the RFID device or smartcard or can partially cover the area leaving selectively exposed regions.

The metal foils may comprise a conductive material (such as aluminum on PVC), having a sheet resistance which is very low, on the order of only a few Ohms, which normally should block the electromagnetic field (such as between the booster antenna BA and an external reader, or between the booster antenna BA and the antenna module AM), but a mitigating factor may be the thickness of the aluminum (or other material), being thin enough to allow the electromagnetic field to pass through.

Metal foils or substrate materials having metallized coatings may be used in the production of the booster antenna (BA) for RFID devices or smartcards. The metal can be any pure metal such as aluminum or copper or an alloy. Other electrical conductors such as metal nanoparticles, metal nanowires or carbon-based conductors like graphite or exfoliated graphite may also be used.

Metal foils, metallic coatings, segments of metal foil or metal particles may be deposited on or embedded in the inlay substrate or card body to alter the electrical characteristics of the RFID device or smartcard.

The effect of the metal or metallic structures can be to dampen the booster antenna (BA) resulting in a widening of the resonance curve of the booster antenna (BA) and lowering the quality factor (Q). The metal or metallic structure can also have a capacitive effect in the circuit. These effects can enhance the performance of the RFID device or smartcard. The communication between the RFID device or smartcard and the reader can thus be improved.

The metal foil, metal coating or metal particles can be implemented in the device in a number of ways, for example, but not limited to:
(a) A very thin metal continuous metal foil can be deposited on the booster inlay or within the booster inlay. The metal can be thin (less than 10 micron in thickness for example) or extremely thin (or the order of nanometers). The metal foil can deposited anywhere within the body of the card and may have size matching the full area of the card of part of the card. The foil can also be used to overlap only the booster antenna or parts of the booster antenna.
(b) A perforated metal foil can be used. The perforations allow the electromagnetic flux from the RFID reader to largely penetrate the card. The perforated foil can be deposited anywhere within the card as described in 1 above.
(c) A metal mesh can be used. The mesh can be deposited anywhere within the card as described in (a).

Metal particles of various sizes and shapes (including spheres and flakes) can be deposited on the surface of the booster antenna (BA) or an additional inlay within the card body. The metal particles can be formed a range of materials including metal alloys and can be deposited within the material used to form the inlay or other layers within the card body. The metal particles can also be derived from a conventional metallic finish on the surface of the card.

According to some not claimed examples, a card body (CB) for a smart card (SC) may comprise: a metal foil (MF) layer incorporated into the card body (CB); the metal foil (MF) comprises a material selected from the group consisting of pure metals, alloys, aluminum, copper, metal nanoparticles, metal nanowires, carbon-based conductors, graphite, and exfoliated graphite; and the metal foil may be characterized by one or more of: the metal foil comprises a very thin continuous layer deposited on the card body (CB); the metal foil has a size matching an area of the card body (CB), or only a portion thereof; the metal foil overlaps only the booster antenna (BA) or portions or components of the booster antenna; the metal foil comprises multiple areas of foils which are deposited on or in the card body (CB); the metal foil is perforated, segmented or discontinuous; the metal foil is continuous, and has a thickness less than 15nm; the metal foil is discontinuous, and has a thickness greater than 15nm; the metal foil comprises a mesh; the metal foil comprises metal particles of various sizes and shapes; the metal foil partially covers the smartcard area, leaving exposed metal-free region at a coupling coil (CC) of the booster antenna (BA); the metal foil reduces the quality (Q) of the booster antenna without having destructive effects on the coupling between the booster antenna (BA) and the antenna module (AM); the metal foil comprises a continuous loop; the metal foil comprises a discontinuous loop; the metal foil comprises a resistor formed by narrowing a section of a metal loop; and the metal foil comprises a conductive material having a sheet resistance on the order of only a few Ohms. The metal foil may be characterized by at least one of: the metal foil is continuous, and has a thickness of less than 10µm; the metal foil is perforated; the metal foil comprises a mesh; and the metal foil comprises metal particles.

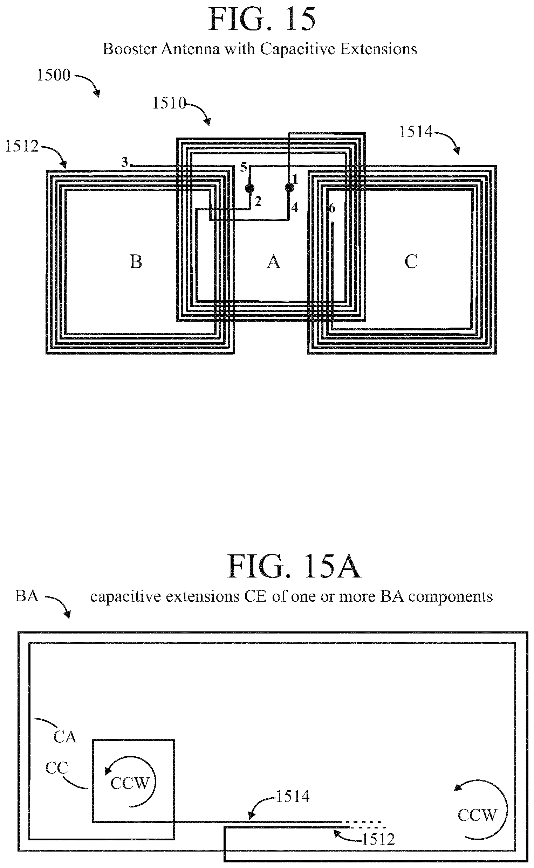

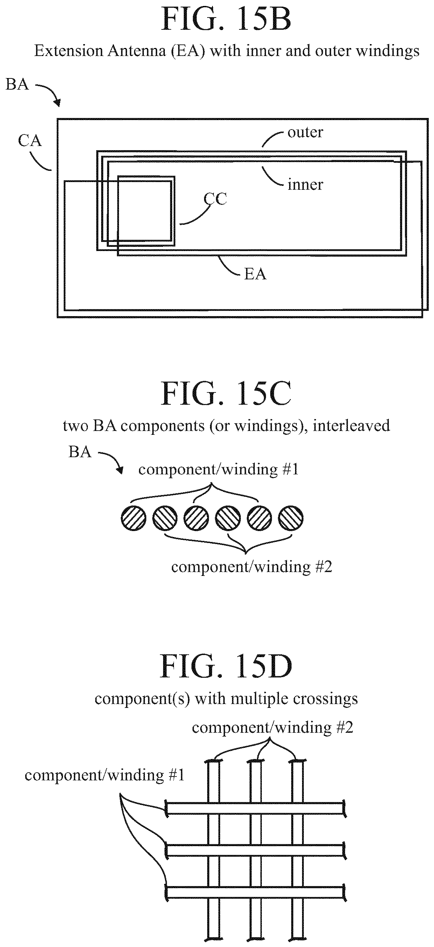

**FIG. 15** shows (schematically) an embodiment of a booster antenna BA having an antenna component 1510, which may be any one (or more) of the card antenna CA, coupler coil CC or extension antenna EA components. Here, the antenna component 1510 is shown as having two ends "1" and "2", which are not free ends, but it is within the scope of the invention that the antenna component 1510 has only one free end, or no free ends.

A first stub (or extension CE) component 1512 is connected (in any suitable manner, as represented by the black dot) by an end "4 to the end "1" of the antenna component 1510, and has another end "3" which is left unconnected (as a free end). A second stub (or extension CE) component 1514 is connected (in any suitable manner, as represented by the black dot) by an end "5 to the end "2" of the antenna component 1510, and has another end "6" which is left unconnected (as a free end). The stub components 1512 and 1514 constitute capacitive extensions of the antenna component 1510, such as has been described in US 13205600 filed 08 Aug 2011 (now US 8474726 issued 2013-07-12), with respect to a module antenna in an antenna module. This includes that there may be two capacitive stubs and that they may be formed in a flat coil pattern having a number of turns, and that they may be substantially identical with one another.

**FIG. 15A** shows a more realistic representation of a booster antenna BA having a card antenna CA component, a coupler coil CC component, and two capacitive extension components 1512 and 1514. One capacitive extension CE component 1512 extends from an end of the card antenna CA component. The other capacitive extension CE component 1514 extends from an end of the coupler coil CC component. This illustrates that the capacitive extension CE components may extend from different components (CA, CC, EA) of the booster antenna BA. (Any of the components illustrated may have two (or more windings), but are shown with a single winding, for illustrative clarity. The extension antenna EA component has been omitted, for illustrative clarity, but is one of the booster antenna BA components provided with one or more capacitive extensions, and itself may be arranged to serve as a capacitive extension CE.)

**FIG. 15B** shows an embodiment of a booster antenna BA having a card antenna CA component, a coupler coil CC component, and an extension antenna EA component. In this example, the extension antenna EA component is shown having inner and outer windings. Compare **FIG. 4I** which shows two extension antennas EA-1 and EA2. This illustrates that a given component (CA, CC, EA) of a booster antenna BA may have two or more windings which may be, but need not necessarily be arranged as inner and outer (IW/OW, iw/ow, IP/OP) windings. And, although the booster antenna BA in this example is shown without and free ends, it should be understood that any of the components (CA, CC, EA, as well as CE) may have at least one free end, the card antenna having at least one free end.

**FIG. 15C** shows a portion of a booster antenna BA wherein two components (any of CA, CC, EA, CE) or two windings of a single component, or portions thereof, are laid so that their turns are interleaved with one another - herein labeled as "component/winding #1" and "component/ winding #2" .

**FIG. 15D** shows a portion of a booster antenna BA wherein at least one component (any of CA, CC, EA, CE), or portions thereof, is laid so that several of its/their turns cross over each other, multiple times. Here, one of the components "component/winding #1" is shown with at least portions of some of its turns laid horizontally (from left-to-right, as viewed) on the card body (CB, not shown), and the other of the components "component/winding #2" is shown with at least portions of some of its turns laid vertically (from top-to-bottom, as viewed) on the card body (CB).

## Claims

1. Card body (CB) for a smart card, comprising:
a surface having a surface area, an upper portion of the surface constituting approximately half of the surface area of the card body and a lower portion of the surface constituting a remaining approximately half of the surface area of the card body;
a first area extending around a peripheral portion of the card body in at least the upper portion of the card body;
a card antenna (CA) disposed at least partially in the first area and having at least one free end;
a second area located in the upper portion of the card body and corresponding in size to an antenna module (AM) for the smart card; and
a third area located in the upper portion of the card body which is separate from the first area and the second area;
**characterized by**:
a coupler coil (CC) disposed in the second area;
an extension antenna (EA) disposed in the third area, wherein the extension antenna (EA) is in the form of a coil and is connected at one end to the coupler coil (CC) or the card antenna (CA); and
wherein the card antenna (CA), the coupler coil (CC) and the extension antenna (EA) are components of a booster antenna (BA).

2. The card body of claim 1, wherein the card antenna (CA) component and the coupler coil (CC) component, and particularly the extension antenna (EA) component, are formed from one continuous length of wire.

3. The card body of claim 1 or 2, wherein at least one of the card antenna (CA) component, the coupler coil (CC) component and the extension antenna (EA) component has a free end.

4. The card body of any of the preceding claims, wherein at least one of the components has a sense which is opposite to a sense of one or more of the other components, particularly wherein the extension antenna (EA) component has a sense opposite to that from the card antenna (CA) component.

5. The card body of any of the preceding claims, wherein the coupler coil (CC) component has a sense which is the same as a sense of the extension antenna (EA) component.

6. The card body of any of the preceding claims, wherein at least one of the components comprises an outer winding (OW, ow) and an inner winding (IW, iw).

7. The card body of any of the preceding claims, wherein at least one of the components is laid from an innermost turn to an outermost turn; and
at least one of the other components is laid from an outermost turn to an innermost turn.

8. The card body of any of the preceding claims, wherein the booster antenna comprises as further component at least one capacitive extension (CE) which is connected with one or more of the other components.

9. The card body of claim 8, wherein at least a portion of one of the components is laid so that its turns are interleaved with (i) a portion of another component, or (ii) another portion of the same component.

10. The card body of claim 8, wherein at least one component is laid so that its wire crosses over itself at several positions or over a wire of one or more of the other components, in particular it crosses multiple times.

11. The card body of claim 8, wherein the at least one capacitive extension is at least one capacitive stub (1512, 1514) connected with at least one of the coupler coil (CC) component and the card antenna (CA) component.

12. The card body of claim 11, wherein:
two capacitive stubs are present,
wherein one of the capacitive stubs (1512) is connected with the card antenna (CA) component; and
another of the capacitive stubs (1514) is connected with the coupler coil (CC) component.

13. A smart card comprising:
the card body (CB) of any of the preceding claims; and
a radio frequency identification (RFID) chip.

## Patentansprüche

1. Kartenkörper (CB) für eine Smartcard, umfassend:
eine Oberfläche mit einer Fläche, wobei ein oberer Teil der Oberfläche ungefähr die Hälfte der Fläche des Kartenkörpers ausmacht und wobei ein unterer Teil der Oberfläche eine verbleibende ungefähre Hälfte der Fläche des Kartenkörpers ausmacht;
einen ersten Bereich, der sich um einen Randabschnitt des Kartenkörpers in wenigstens dem oberen Teil des Kartenkörpers erstreckt;
eine Kartenantenne (CA), die zumindest teilweise in dem ersten Bereich angeordnet ist und die wenigstens ein freies Ende hat;
einen zweiten Bereich, der sich in dem oberen Teil des Kartenkörpers befindet und dessen Größe einem Antennenmodul (AM) für die Smartcard entspricht; und
einen dritten Bereich, der sich in dem oberen Teil des Kartenkörpers befindet und der von dem ersten Bereich und dem zweiten Bereich gesondert ist;
**gekennzeichnet durch**:
eine Kopplerspule (CC), die in dem zweiten Bereich angeordnet ist;
eine Erweiterungsantenne (EA), die in dem dritten Bereich angeordnet ist, wobei die Erweiterungsantenne (EA) die Form einer Spule hat und an einem Ende mit der Kopplerspule (CC) oder der Kartenantenne (CA) verbunden ist; und
wobei die Kartenantenne (CA), die Kopplerspule (CC) und die Erweiterungsantenne (EA) Komponenten einer Verstärkerantenne (BA) sind.

2. Kartenkörper nach Patentanspruch 1, wobei die Kartenantennen-(CA-)Komponente und die Kopplerspulen-(CC-)Komponente, und insbesondere die Erweiterungsantennen-(EA-)Komponente, aus einem durchgehenden Drahtstück gebildet sind.

3. Kartenkörper nach Patentanspruch 1 oder 2, wobei wenigstens eine der Komponenten Kartenantenne (CA), Kopplerspule (CC) und Erweiterungsantenne (EA) ein freies Ende aufweist.

4. Kartenkörper nach einem der vorstehenden Patentansprüche, wobei wenigstens eine der Komponenten eine Orientierung hat, die zu einer Orientierung von zumindest einer oder mehrerer der anderen Komponenten entgegengesetzt ist, insbesondere wobei die Erweiterungsantennen-(EA-)Komponente eine Orientierung hat, die entgegengesetzt ist zu jener der Kartenantennen-(CA-)Komponente.

5. Kartenkörper nach einem der vorstehenden Patentansprüche, wobei die Kopplerspulen-(CC-)Komponente eine Orientierung hat, welche identisch ist zu einer Orientierung der Erweiterungsantennen-(EA-)Komponente.

6. Kartenkörper nach einem der vorstehenden Patentansprüche, wobei wenigstens eine der Komponenten eine äußere Windung (OW, ow) und eine innere Windung (IW, iw) umfasst.

7. Kartenkörper nach einem der vorstehenden Patentansprüche, wobei wenigstens eine der Komponenten von einer innersten Windung zu einer äußersten Windung verlegt ist; und wobei wenigstens eine der anderen Komponenten von einer äußersten Windung zu einer innersten Windung gelegt ist.

8. Kartenkörper nach einem der vorstehenden Patentansprüche, wobei die Verstärkerantenne als eine weitere Komponente wenigstens eine kapazitive Verlängerung (CE) umfasst, welche mit einer oder mehreren der anderen Komponenten verbunden ist.

9. Kartenkörper nach Patentanspruch 8, wobei wenigstens ein Teil einer der Komponenten so verlegt ist, dass ihre Windungen sich (i) mit einem Teil einer anderen Komponente, oder (ii) mit einem anderen Teil derselben Komponente abwechseln.

10. Kartenkörper nach Patentanspruch 8, wobei wenigstens eine Komponente so verlegt ist, dass ihr Draht an etlichen Stellen über sich selbst kreuzt oder über einen Draht von einer oder mehreren der anderen Komponenten, insbesondere überkreuzt er mehrfach.

11. Kartenkörper nach Patentanspruch 8, wobei die wenigstens eine kapazitive Verlängerung wenigstens ein kapazitiver Stichleiter (1512, 1514) ist, der zumindest mit einer der Komponenten Kopplerspule (CC) und Kartenantenne (CA) verbunden ist.

12. Kartenkörper nach Patentanspruch 11, wobei:
zwei kapazitive Stichleiter vorhanden sind,
wobei einer der kapazitiven Stichleiter (1512) mit der Kartenantennen-(CA-)Komponente verbunden ist; und
der andere kapazitive Stichleiter (1514) mit der Kopplerspulen-(CC-)Komponente verbunden ist.

13. Smartcard umfassend:
den Kartenkörper (CB) nach einem der vorstehenden Patentansprüche; und
einen Radio-Frequency-Identification-(RFID-)Chip.

## Revendications

1. Corps de carte (CB) pour une carte intelligente, comprenant :
une surface ayant une superficie, une partie supérieure de la surface constituant approximativement la moitié de la superficie du corps de carte, et une partie inférieure de la surface constituant approximativement la moitié restante de la superficie du corps de carte ;
une première zone s'étendant autour d'une partie périphérique du corps de carte dans au moins la partie supérieure du corps de carte ;
une antenne de carte (CA) disposée au moins partiellement dans la première zone et ayant au moins une extrémité libre ;
une deuxième zone située dans la partie supérieure du corps de carte et dont la taille correspond à un module d'antenne (AM) pour la carte intelligente ; et
une troisième zone située dans la partie supérieure du corps de carte qui est séparée de la première zone et de la deuxième zone ;
**caractérisé par** :
une bobine de couplage (CC) disposée dans la deuxième zone ;
une antenne d'extension (EA) disposée dans la troisième zone, dans lequel l'antenne d'extension (EA) est sous la forme d'une bobine et est connectée au niveau d'une extrémité à la bobine de couplage (CC) ou à l'antenne de carte (CA) ; et
dans lequel l'antenne de carte (CA), la bobine de couplage (CC) et l'antenne d'extension (EA) sont des composants d'une antenne amplificatrice (BA).

2. Corps de carte selon la revendication 1, dans lequel le composant d'antenne de carte (CA) et le composant de bobine de couplage (CC) et en particulier le composant d'antenne d'extension (EA) sont formés à partir d'une longueur de fil continue.

3. Corps de carte selon la revendication 1 ou 2, dans lequel au moins un parmi le composant d'antenne de carte (CA), le composant de bobine de couplage (CC) et le composant d'antenne d'extension (EA) a une extrémité libre.

4. Corps de carte selon l'une des revendications précédentes, dans lequel au moins un des composants a un sens qui est opposé à un sens d'un ou plusieurs des autres composants, en particulier dans lequel le composant d'antenne d'extension (EA) a un sens opposé à celui du composant d'antenne de carte (CA).

5. Corps de carte selon l'une des revendications précédentes, dans lequel le composant de bobine de couplage (CC) a un sens qui est le même qu'un sens du composant d'antenne d'extension (EA).

6. Corps de carte selon l'une des revendications précédentes, dans lequel au moins un des composants comprend un enroulement extérieur (OW, ow) et un enroulement intérieur (IW, iw).

7. Corps de carte selon l'une des revendications précédentes, dans lequel au moins un des composants est posé de la spire le plus à l'intérieur à la spire le plus à l'extérieur ; et
au moins un des autres composants est posé de la spire le plus à l'extérieur à la spire le plus à l'intérieur.

8. Corps de carte selon l'une des revendications précédentes, dans lequel l'antenne amplificatrice comprend en tant que composant supplémentaire au moins une extension capacitive (CE) qui est connectée à un ou plusieurs des autres composants.

9. Corps de carte selon la revendication 8, dans lequel au moins une partie de l'un des composants est posée de façon à ce que ses spires soient entrelacées avec (i) une partie d'un autre composant, ou (ii) une autre partie du même composant.

10. Corps de carte selon la revendication 8, dans lequel au moins un composant est posé de façon à ce que son fil se croise à plusieurs positions ou passe par-dessus un fil d'un ou plusieurs autres composants, le croisement se faisant en particulier à plusieurs reprises.

11. Corps de carte selon la revendication 8, dans lequel l'au moins une extension capacitive est au moins un tronçon capacitif (1512, 1514) connecté à au moins un parmi le composant de bobine de couplage (CC) et le composant d'antenne de carte (CA).

12. Corps de carte selon la revendication 11, dans lequel :
deux tronçons capacitifs sont présents,
dans lequel l'un des tronçons capacitifs (1512) est connecté au composant d'antenne de carte (CA) ; et
un autre des tronçons capacitifs (1514) est connecté au composant de bobine de couplage (CC).

13. Carte intelligente comprenant :
le corps de carte (CB) selon l'une des revendications précédentes ; et
une puce d'identification par radiofréquence (RFID).
